(19) Europäisches Patentamt
European Patent Office
Office européen des brevets

(11) Veröffentlichungsnummer : **0 053 679**
**B1**

(12) # EUROPÄISCHE PATENTSCHRIFT

(45) Veröffentlichungstag der Patentschrift : **22.01.86**

(51) Int. Cl.[4] : **C 07 C 83/10**, A 01 N 37/38

(21) Anmeldenummer : **81108484.7**

(22) Anmeldetag : **19.10.81**

(54) **Diphenylether, Verfahren zu ihrer Herstellung und ihre Verwendung als Herbizide.**

(30) Priorität : **05.12.80 DE 3045805**

(43) Veröffentlichungstag der Anmeldung : **16.06.82 Patentblatt 82/24**

(45) Bekanntmachung des Hinweises auf die Patenterteilung : **22.01.86 Patentblatt 86/04**

(84) Benannte Vertragsstaaten : **AT BE CH DE FR GB IT LI LU NL SE**

(56) Entgegenhaltungen : **US-A- 4 208 205**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Parg, Adolf, Dr.**
**Paray-le-Monial-Strasse 8**
**D-6702 Bad Duerkheim (DE)**
Erfinder : **Hamprecht, Gerhard, Dr.**
**Rote-Turm-Strasse 28**
**D-6940 Weinheim (DE)**
Erfinder : **Wuerzer, Bruno, Dipl.-Landwirt. Dr.**
**Ruedigerstrasse 13**
**D-6701 Otterstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die vorliegende Erfindung betrifft Diphenylether, Verfahren zu ihrer Herstellung, Herbizide, die diese Verbindungen als Wirkstoffe enthalten, sowie ein Verfahren zur Bekämpfung unerwünschten Pflanzenwuchses mit diesen Wirkstoffen.

Aus der Literatur sind zahlreiche herbizide Wirkstoffe aus der Klasse der Diphenylether bekannt, beispielsweise 2-Chlor-4-trifluormethyl-3'-carbamoyl-4'-nitrodiphenylether (JP-OS 79/151 943), Diphenylether-oximderivate (DE-OS 28 37 857) oder das Natriumsalz des 2-Chlor-4-trifluormethyl-3'-carboxy-4'-nitrodiphenylethers, das insbesondere zur Unkrautbekämpfung in Sojabohnen Verwendung findet (DE-OS 23 11 638).

Es wurde gefunden, daß Diphenylether der Formel I

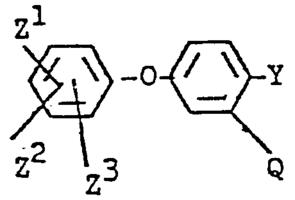

(I)

in der

$Z^1$ für Halogen, Nitro, Alkyl mit 1 bis 4 Kohlenstoffatomen, Halogenalkyl, Alkoxy, Halogenalkoxy, Alkylmercapto, Halogenalkylmercapto oder Halogenalkylsulfonyl mit jeweils 1 bis 4 Kohlenstoffatomen in der Alkylgruppe,

$Z^2$ und $Z^3$ jeweils unabhägig voneinander für Wasserstoff, Halogen, Nitro, Alkyl mit 1 bis 4 Kohlenstoffatomen, Halogenalkyl, Alkoxy, Halogenalkoxy, Alkylmercapto, Halogenalkylmercapto oder Halogenalkylsulfonyl mit jeweils 1 bis 4 Kohlenstoffatomen in der Alkylgruppe,

Y für Wasserstoff oder Nitro und

Q für den Rest —CO—NA—$OR^1$, wobei

A Wasserstoff, Alkyl mit 1 bis 4 Kohlenstoffatomen, ein Metallion oder ein gegebenenfalls substituiertes Ammoniumion und

$R^1$ Carboxyalkyl oder Alkoxycarbonylalkyl mit bis zu 10 Kohlenstoffatomen bedeuten,

eine sehr gute herbizide Aktivität besitzen und je nach Aufbereitung und Dosierung sowohl selektiv herbizid wirksam als auch zur temporären totalen Bekämpfung krautiger Pflanzen geeignet sind.

In Formel I bedeuten $Z^1$, $Z^2$ und $Z^3$ jeweils unabhängig voneinander Halogen, wie Fluor, Chlor, Brom, Jod, Nitro, Alkyl mit 1 bis 4 Kohlenstoffatomen, wie Methyl, Ethyl, n-Propyl, i-Propyl, n-Butyl, tert.-Butyl, Halogenalkyl, Alkoxy, Halogenalkoxy, Alkylmercapto, Halogenalkylmercapto oder Halogenalkylsulfonyl mit jeweils 1 bis 4 Kohlenstoffatomen in der Alkylgruppe, wie Trifluormethyl, Difluormethyl, Fluormethyl, Trichlormethyl, Dichlormethyl, Chlormethyl, Difluorchlormethyl, 1-Chlorethyl, 2-Chlorethyl, 1-Fluorethyl, 2-Fluorethyl, 2,2,2-Trichlorethyl, 2,2,2-Trifluorethyl, 1,1,2,2-Tetrafluorethyl, 1,1,2-Trifluor-2-chlorethyl, 1,1,2,2,2-Pentafluorethyl, Methoxy, Ethoxy, n-Propyloxy, i-Propyloxy, tert.-Butyloxy, Trichlormethoxy, Trifluormethoxy, 1-Chlorethoxy, 2-Chlorethoxy, 1-Fluorethoxy, 2-Fluorethoxy, 2,2,2-Trichlorethoxy, 2,2,2-Trifluorethoxy, 1,1,2,2-Tetrafluorethoxy, 1,1,2,2,2-Pentafluorethoxy, Methylmercapto, Ethylmercapto, Trichlormethylmercapto, Trifluormethylmercapto oder Trifluormethylsulfonyl ;

$Z^1$ und $Z^2$ können außerdem jeweils unabhängig voneinander Wasserstoff bedeuten ;

Q bedeutet den Rest —CO—NA—$OR^1$, wobei

A für Wasserstoff, Alkyl mit 1 bis 4 Kohlenstoffatomen, insbesondere Methyl oder Ethyl, ein Metallion oder ein gegebenenfalls substituiertes Ammoniumion, beispielsweise ein Trialkylammoniumion oder das unsubstituierte Ammoniumion, insbesondere für das Natrium- oder Kaliumion, und

$R^1$ für einen Carboxyalkylrest der Formel $-(CHR^2)_n-COOH$, in der $R^2$ Wasserstoff, Methyl oder Ethyl und n die Zahlen 1, 2 oder 3 bedeuten für einen Alkoxycarbonylalkylrest der Formel $-(CHR^2)_n-COOR^3$, in der $R^2$ Wasserstoff, Methyl oder Ethyl, n die Zahlen 1 oder 2 und $R^3$ Alkyl mit 1 bis 3 Kohlenstoffatomen, wie Methyl, Ethyl, Propyl.

Die Substituenten $Z^1$, $Z^2$ und $Z^3$ stehen vorzugsweise in 2,4,6-, 3,4,6- und 3,4,5-Stellung am Phenyl.

Bevorzugte Diphenylether sind Verbindungen der Formel I, in der $Z^1$, $Z^2$ und $Z^3$ in 2,4,6-, 3,4,6- oder 3,4,5-Stellung am Phenyl jeweils unabhängig voneinander für Halogen, Halogenalkyl oder Halogenalkylmercapto mit jeweils 1 bis 4 Kohlenstoffatomen und $Z^2$ und $Z^3$ außerdem für Wasserstoff, Y für Wasserstoff oder Nitro und Q für den Rest —CO—NA—$OR^1$ stehen, wobei A Wasserstoff oder Alkyl mit 1 bis 4 Kohlenstoffatomen und $R^1$ Carboxyalkyl oder Alkoxycarbonylalkyl mit bis zu 6 Kohlenstoffatomen bedeuten, bzw. Verbindungen der Formel I, in der $Z^1$ $Z^2$ und $Z^3$ in 2,4,6-, oder 3,4,5-Stellung jeweils unabhängig voneinander für Halogen oder Halogenalkyl mit 1 bis 4 Kohlenstoffatomen und $Z^2$ und $Z^3$ außerdem für Wasserstoff, Y für Wasserstoff oder Nitro und Q für den Rest —CO—NA—$OR^1$ stehen, wobei A Wasserstoff und $R^1$ Alkoxycarbonylalkyl mit bis zu 6 Kohlenstoffatomen bedeuten.

Die Verbindungen der Formel I können nach folgenden Verfahren hergestellt werden :

Nach Verfahren a) setzt man das Säurechlorid der allgemeinen Formel II

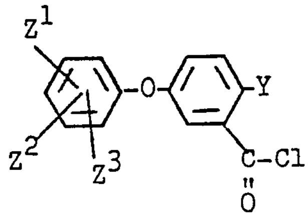

(II)

in der $Z^1$, $Z^2$, $Z^3$ un Y die obengenannten Bedeutungen haben, mit der mindestens äquimolaren Menge eines O-substituierten Hydroxylamins der allgemeinen Formel III

$$H_2N—O—R^1 \qquad (III),$$

in der $R^1$ die obengenannte Bedeutung hat, in einem inerten organischen Lösungsmittel gegebenenfalls unter Zusatz eines Säureacceptors bei Temperaturen im Bereich von − 10 bis + 120 °C, drucklos oder unter Druck, kontinuierlich oder diskontinuierlich, zu den Verbindungen der Formel

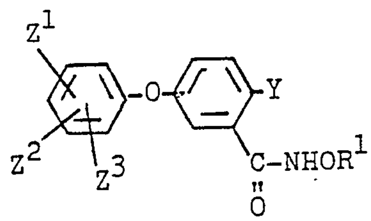

um.

Nach Verfahren b) wird die Hydroxamsäure der allgemeinen Formel IV

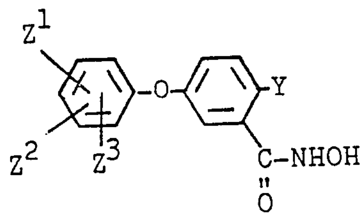

(IV)

in der $Z^1$, $Z^2$, $Z^3$ und Y die obengenannten Bedeutungen haben, mit der mindestens äquimolaren Menge einer Halogenverbindung der allgemeinen Formel V

$$Hal—R^1 \qquad (V),$$

in der $R^1$ die obengenannte Bedeutung hat und Hal für Halogen steht, in einem inerten organischen Lösungsmittel, gegebenenfalls auch unter Zusatz von Wasser, und in Gegenwart eines Säureacceptors, insbesondere von Natrium- oder Kaliumhydroxid, bei Temperaturen im Bereich von 0 bis 150 °C, drucklos oder unter Druck, kontinuierlich oder diskontinuierlich, zu den Verbindungen der Formel

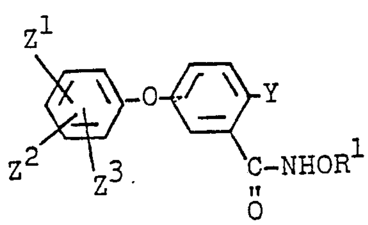

umgesetzt.

Nach Verfahren c) nitriert man die Hydroxamsäure der Formel VI

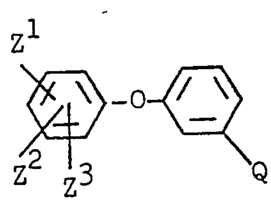

(VI)

in der $Z^1$, $Z^2$ und $Z^3$ die obengenannten Bedeutungen haben und Q für den Rest —CO—NA—O—$R^1$ steht, wobei A Wasserstoff bedeutet und $R^1$ die obengenannten Bedeutungen hat, mit der äquivalenten Menge eines Nitriergemisches, bestehend aus konzentrierter Salpetersäure oder Alkalinitrat und konzentrierter Schwefelsäure, gegebenenfalls in Gegenwart eines organischen Lösungsmittels (Essigsäure, Essigsäureanhydrid, Dichlorethan) bei einer Temperatur im Bereich von – 10 bis + 15 °C, drucklos oder unter Druck, kontinuierlich oder diskontinuierlich, zu Verbindungen der Formel

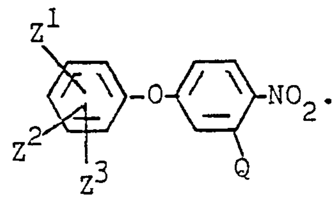

Das Verfahren a) läßt sich durch folgendes Formelschema wiedergeben :

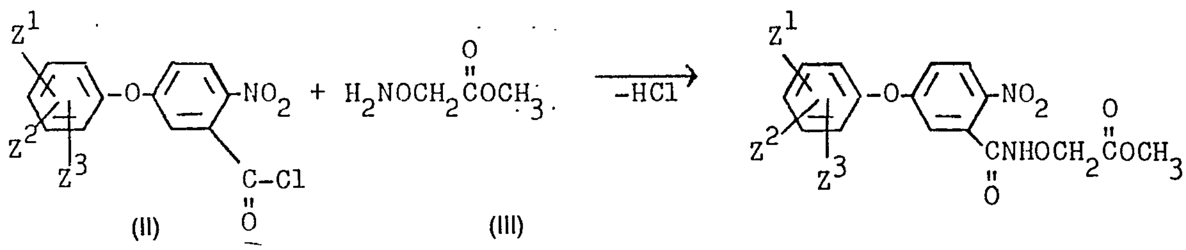


(II) (III)

Die Ausgangsstoffe werden in ungefähr stöchiometrischem Verhältnis eingesetzt, d. h. in einem Unter- bzw. Überschuß von bis zu 10 % an Ausgangsstoff III, bezogen auf II. Gegebenenfalls kann ein Säureacceptor zur Vervollständigung der Reaktion zugesetzt werden, wobei diese Funktion auch das Amin III übernehmen kann. Zweckmäßig wird das Verfahren so durchgeführt, daß man eine Lösung des Säurechlorids II bei – 10 bis + 120 °C, vorzugsweise von 0 bis 60 °C, in einem organischen Lösungsmittel gleichzeitig mit der äquimolaren Menge eines Säureacceptors zu einer Lösung des Amins III in einem inerten organischen Lösungsmittel zulaufen läßt. Zur Beendigung der Umsetzung rührt man 0,5 bis 48 Stunden, vorzugsweise 2 bis 12 Stunden, bei 0 bis 60 °C nach. Das Reaktionsgemisch wird eingeengt. Die gewünschten Endstoffe können durch Umfällen, Umkristallisieren oder durch Verrühren mit Wasser isoliert werden ; gegebenenfalls können sie durch Chromatographie gereinigt werden.

Das Verfahren b) läßt sich durch folgendes Formelschema wiedergeben :

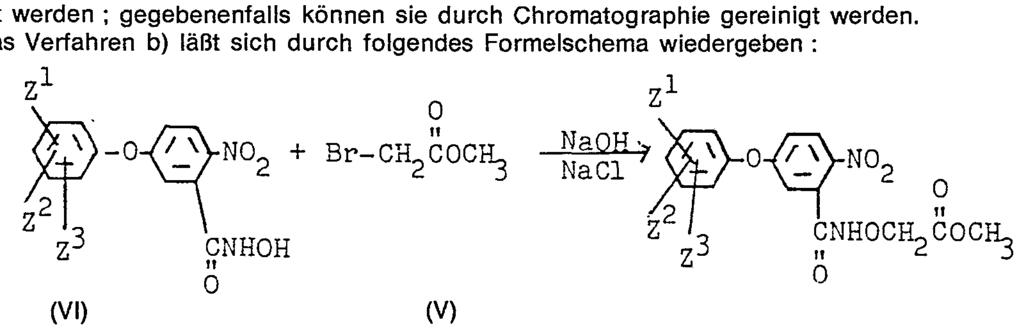


(VI) (V)

Die Ausgangsstoffe werden hierbei in stöchiometrischem Verhältnis eingesetzt, vorzugsweise arbeitet man jedoch mit einem Überschuß von bis zu 50 % an Ausgangstoff V, bezogen auf IV. Zweckmäßig wird das Verfahren so durchgeführt, daß man eine Mischung aus Hydroxamsäure, Halogenkomponente V und Säureacceptor in einem organischen Lösungsmittel, gegebenenfalls unter Zusatz von Wasser, herstellt. Als Säureacceptor eignen sich vorzugsweise Kalium- und Natriumhydroxid in der 1- bis 1,5fachen molaren Menge, bezogen auf Ausgangsstoff IV. Die Reaktionsmischung wird 0,5 bis 48 Stunden, vorzugsweise 2 bis 12 Stunden, bei Temperaturen von 0 bis 150 °C, vorzugsweise 20 bis 120 °C, gerührt. Das Reaktionsgemisch wird eingeengt. Die gewünschten Endstoffe können durch Umfällen, Umkristallisation oder durch Extraktion isoliert werden, gegebenenfalls können sie durch Chromatographie gereinigt werden.

Das Verfahren c) läßt sich durch folgendes Formelschema wiedergeben :

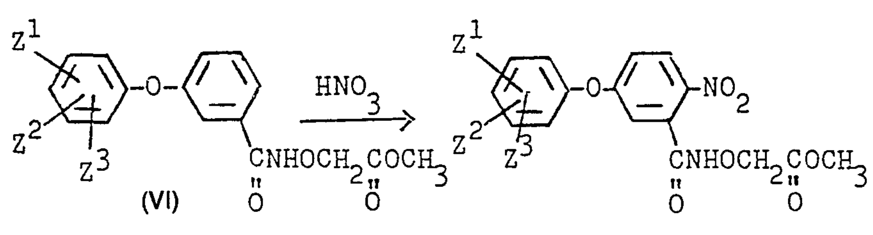


(VI)

Eine Lösung des Ausgangsstoffes VI, vorzugsweise in Essigsäureanhydrid oder Dichlorethan, wird mit der stöchiometrischen Menge an konzentrierter Salpetersäure oder Alkalinitrat (Kaliumnitrat) in Gegenwart der 1- bis 10-fachen molaren Menge an konzentrierter Schwefelsäure, bezogen auf das Nitrierungsmittel, bei Temperaturen von − 10 bis + 15 °C, vorzugsweise − 5 bis + 5 °C, innerhalb 0,5 bis 8 Stunden, insbesondere 1 bis 4 Stunden, nitriert. Zur Vervollständigung der Reaktion kann bei 15 bis 25 °C über 2 bis 8 Stunden nachgerührt werden. Zur Aufarbeitung rührt man das Reaktionsgemisch zunächst in Eis/Wasser ein und isoliert das Endprodukt durch Extraktion oder Absaugen ; dieses kann durch Umfällen, Umkristallisieren oder gegebenenfalls durch Chromatographie gereinigt werden.

Die Ausgangsstoffe werden in ungefähr stöchiometrischem Verhältnis eingesetzt, d. h. in einem Unter- bzw. Überschuß von bis zu 10 % an Ausgangsstoff VIII bezogen auf VII. Zweckmäßigerweise wird das Verfahren so durchgeführt, daß man eine Lösung der Ausgangsstoffe VIII und VII in einem organischen Lösungsmittel bei Temperaturen von 20 bis 150 °C, vorzugsweise 60 bis 120 °C, über 0,5 bis 48 Stunden, insbesondere 2 bis 12 Stunden, rührt. Gegebenenfalls kann das Reaktionswasser mit Hilfe eines Schleppmittels (Toluol) über einen Wasserabscheider ausgekreist werden. Das Reaktionsgemisch wird dann eingeengt. Die Endstoffe können durch Umfällen, Umkristallisieren oder Extraktion isoliert werden ; gegebenenfalls können sie durch Chromatographie gereinigt werden.

Man verwendet für die Verfahren a), b), c) unter den jeweiligen Reaktionsbedingungen inerte organische Lösungsmittel. Als Lösungsmittel kommen z. B. in Frage : Halogenkohlenwasserstoffe, insbesondere Chlorkohlenwasserstoffe, z. B. Tetrachlorethylen, 1,1,2,2- oder 1,1,1,2-Tetrachlorethan, Dichlorpropan, Methylenchlorid, Dichlorbutan, Chloroform, Chlornaphthalin, Dichlornaphthalin, Tetrachlorkohlenstoff, 1,1,1- oder 1,1,2-Trichlorethan, Trichlorethylen, Pentachlorethan, o-, m-, p-Difluorbenzol, 1,2-Dichlorethan, 1,1-Dichlorethan, 1,2-cis-Dichlorethylen, Chlorbenzol, Fluorbenzol, Brombenzol, Jodbenzol, o-, p- und m-Dichlorbenzol, o-, p-, m-Dibrombenzol, o-, m-, p-Chlortoluol, 1,2,4-Trichlorbenzol ; Ether, z. B. Ethylpropylether, Methyl-tert.-butylether, n-Butylethylether, Di-n-butylether, Diisobutylether, Diisoamylether, Diisopropylether, Anisol, Phenetol, Cyclohexylmethylether, Diethylether, Ethylenglykoldimethylether, Tetrahydrofuran, Dioxan, Thioanisol, β,β'-Dichlordiethylether ; Nitrokohlenwasserstoffe wie Nitromethan, Nitroethan, Nitrobenzol, o-, m-, p-Chlornitrobenzol, o-Nitrotoluol ; Nitrile wie Acetonitril, Butyronitril, Isobutyronitril, Benzonitril, m-Chlorbenzonitril ; aliphatische oder cycloaliphatische Kohlenwasserstoffe, z. B. Heptan, Pinan, Nonan, o-, m-, p-Cymol, Benzinfraktionen innerhalb eines Siedepunktintervalls von 70 bis 190 °C, Cyclohexan, Methylcyclohexan, Dekalin, Petrolether, Hexan, Ligroin, 2,2,4-Trimethylpentan, 2,2,3-Trimethylpentan, 2,3,3-Trimethylpentan, Octan ; Ester, z. B. Ethylacetat, Acetessigester, Isobutylacetat ; Amide, z. B. Formamid, Methylformamid, Dimethylformamid ; Ketone, z. B. Aceton, Methylethylketon ; und entsprechende Gemische. Zweckmäßig verwendet man das Lösungsmittel in einer Menge von 100 bis 2 000 Gew.-%, vorzugsweise von 200 bis 700 Gew.-%, bezogen auf die Ausgangsstoffe.

Wird die Reaktion unter Zusatz von Wasser gefahren (Verfahren b), so eignen sich als organische Lösungsmittel vor allem Alkohole, wie Methanol, Ethanol, Propanol, iso-Propanol, Butanole, Hexanole, Glykol, Cyclohexanol, Cyclopentanol, Cycloheptanol.

Als Säureacceptoren können alle üblichen Säurebindemittel verwendet werden. Hierzu gehören vorzugsweise tertiäre Amine, Erdalkaliverbindungen, Ammoniumverbindungen und Alkaliverbindungen sowie entsprechende Gemische. Es können aber auch Zinkverbindungen verwendet werden. Es kommen z. B. basische Verbindungen in Frage : Kaliumhydroxid, Natriumhydroxid, Kaliumcarbonat, Natriumcarbonat, Lithiumhydroxid, Lithiumcarbonat, Natriumbicarbonat, Kaliumbicarbonat, Calciumhydroxid, Calciumoxid, Bariumoxid, Magnesiumhydroxid, Magnesiumoxid, Bariumhydroxid, Calciumcarbonat, Magnesiumcarbonat, Magnesiumbicarbonat, Magnesiumacetat, Zinkhydroxid, Zinkoxid, Zinkcarbonat, Zinkbicarbonat, Zinkacetat, Natriumformiat, Natriumacetat, Trimethylamin, Triethylamin, Tripropylamin, Triisopropylamin, Tributylamin, Triisobutylamin, Tri-sec.-butylamin, Tri-tert.-butylamin, Tribenzylamin, Tricyclohexylamin, Triamylamin, Diisopropylethylamin, Trihexylamin, N,N-Dimethylanilin, N,N-Diethylanilin, N,N-Dipropylanilin, N,N-Dimethyltoluoidin, N,N-Diethyltoluidin, N,N-Dipropyltoluidin, N,N-Dimethyl-p-aminopyrridin, N,N-Diethyl-p-aminopyridin, N,N-Dipropyl-p-aminopyridin, N-Methylpyrrolidon, N-Ethylpyrrolidon, N-Methyl piperidin, N-Ethylpiperidin, N-Methylpyrrolidin, N-Ethylpyrrolidin, N-Methylimidazol, N-Ethylimidazol, N-Methylpyrrol, N-Ethylpyrrol, N-Methylmorpholin, N-Ethylmorpholin, N-Methylhexamethylenimin, N-Ethylhexamethylenimin, Pyridin, Chinolin, α-Picolin, β-Picolin, γ-Picolin, Isochinolin, Pyrimidin, Acridin, N,N,N',N'-Tetramethylethylendiamin, N,N,N',N'-Tetraethylethylendiamin, Chinoxalin, Chinazolin, N-Propyldiisopropylamin, N,N'-Dimethylcyclohexylamin, 2,6-Lutidin, 2,4-Lutidin, Trifurylamin, Triethylendiamin.

Die Ausgangsverbindungen werden nach literaturbekannten Methoden hergestellt. So erfolgt die Darstellung der Säurechloride der allgemeinen Formel II nach allgemein üblichen Arbeitsweisen aus den entsprechenden Säuren mittels chlorierender Agentien. Die Säuren wiederum lassen sich beispielsweise nach den in der US-PS 4 031 131 und der US-PS 4 002 662 beschriebenen Verfahren herstellen.

Für die Herstellung der Hydroxamsäuren eignen sich die Methoden, wie sie in Houben-Weyl, Methoden der organischen Chemie, Band X/4, Seite 10, 12, Georg-Thieme-Verlag, Stuttgart, 1968, beschrieben sind. O-alkylierte Hydroxylamine der allgemeinen Formel III lassen sich nach dem Verfahren in Houben-Weyl, Methoden der organischen Chemie, Band X/1, Seite 1182, Georg-Thieme-Verlag, Stuttgart, 1971 herstellen.

Verzweigte Alkyl- bzw. Alkancarbonsäurereste existieren in verschiedenen enantiomeren Formen und als Racemat. In Rahmen vorliegender Beschreibung sind alle enantiomeren Formen für sich sowie als Gemische in beliebigen gegenseitigen Mischungsverhältnissen, insbesondere dem Racemat, zu verstehen.

Das folgende Beispiel erläutert die Herstellung der Verbindungen der Formel I.
Gewichtsteile verhalten sich zu Volumenteilen wie kg zu 1.

Beispiel

Zu einer Lösung von 37,6 Gewichtsteilen 3-(2'-Chlor-4'-trifluormethylphenoxy)-6-nitro-benzhydroxamsäure in 250 Volumenteilen Ethanol und 70 Volumenteilen Wasser fügt man nacheinander 16,7 Gewichtsteile 2-Brompropionsäuremethylester und 4 Gewichtsteile Natriumhydroxid bei Raumtemperatur zu. Die Reaktionsmischung wird auf Rückflußtemperatur geheizt, zwei Stunden nachgerührt, abgekühlt und im Vakuum zur Trockne eingeengt. Der Rückstand wird in Ether aufgenommen, die organische Phase mit Wasser extrahiert, mit Magnesiumsulfat getrocknet und unter vermindertem Druck eingeengt. Nach Chromatographie über Kieselgel und Aceton/Toluol (30 : 70) erhält man 20 Gewichtsteile (= 43 % der Theorie) der Verbindung der Formel

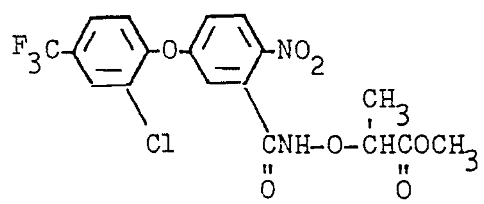 (Verbindung Nr. 1);

Fp.: 119 °C bis 122 °C (aus Diisopropylether umkristallisiert).
Analog lassen sich beispielsweise folgende Verbindungen der Formel I herstellen.

| Nr. | 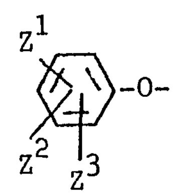 | Y | Q | Fp[°C]; $n_D^{25}$; Wellenlänge einer Bande im IR-Spektrum |
|---|---|---|---|---|
| 2 | 2-Chlor-4-trifluormethylphenoxy | H | $-CO-NH-OCH_2COOCH_3$ | 1,5422 |
| 3 | " " | " | $-CO-NHOCH-COOCH_3$<br>$CH_3$ | 1,5372 |
| 4 | " " | " | -CO-NHOCH-COOH<br>$CH_3$ | |
| 5 | " " | $NO_2$ | $-CO-NHOCH_2COOCH_3$ | 112-116 |
| 6 | " " | $NO_2$ | $-CO-NHO-CHCOOCH_3$<br>$C_2H_5$ | |
| 7 | " " | " | -CO-NHO-CH-COOH<br>$CH_3$ | |

(Fortsetzung)

| Nr. | 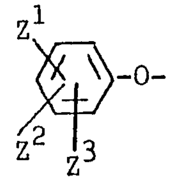 | Y | Q | Fp[°C]; $n_D^{25}$; Wellenlänge einer Bande im IR-Spektrum |
|---|---|---|---|---|
| 8 | " " | " | $-CO-N(Na)-O-CH(CH_3)-COOCH_3$ | $\nu_{CO}$ = 1740 $cm^{-1}$ |
| 9 | 2,4-Dichlor-phenoxy | " | $-CO-NH-OCH_2-COOCH_3$ | |
| 10 | " | $NO_2$ | $-CO-NHO-CH(CH_3)-COOCH_3$ | |
| 11 | " | " | $-CO-NHOCH(C_2H_5)-COOCH_3$ | |

Die Diphenylether der Formel I können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken ; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenoläther, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an festen Trägerstoffen hergestellt werden. Feste Trägerstoffe sind Mineralerden wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten zwischen 0,1 und 95 Gewichtsprozent, vorzugsweise zwischen 0,5 und 90 Gewichtsprozent, Wirkstoff.

Beispiele für Formulierungen sind :

I. Man vermischt 90 Gewichtsteile der Verbindung Nr. 1 mit 10 Gewichtsteilen N-Methyl-α-pyrrolidon und erhählt eine Lösung, die zur Anwendung in Form kleinster Tropfen geeignet ist.

II. 10 Gewichtsteile der Verbindung Nr. 2 werden in einer Mischung gelöst, die aus 90 Gewichtsteilen Xylol, 6 Gewichtsteilen des Anlagerungsproduktes von 8 bis 10 Mol Ethylenoxid an 1 Mol Ölsäure-N-mono-ethanolamid, 2 Gewichtsteilen Calciumsalz der Dodecyl-benzolsulfonsäure und 2 Gewichtsteilen des Anlagerungsproduktes von 40 Mol Ethylenoxid an 1 Mol Ricinusöl besteht.

III. 20 Gewichtsteile der Verbindung Nr. 7 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

IV. 20 Gewichtsteile der Verbindung Nr. 8 werden in einer Mischung gelöst, die aus 25 Gewichtsteilen Cyclohexanol, 65 Gewichtsteilen einer Mineralölfraktion vom Siedepunkt 210 bis 280 °C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

V. 80 Gewichtsteile der Verbindung Nr. 2 werden mit 3 Gewichtsteilen des Natriumsalzes der Diisobutylnaphthalin-sulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

VI. 5 Gewichtsteile der Verbindung Nr. 3 werden mit 95 Gewichtsteilen feinteiligem Kaolin vermischt. Man erhält auf diese Weise ein Stäubemittel, das 5 Gewichtsprozent des Wirkstoffs enthält.

VII. 30 Gewichtsteile der Verbindung Nr. 8 werden mit einer Mischung aus 92 Gewichtsteilen pulverförmigem Kieselsäuregel und 8 Gewichtsteilen Paraffinöl, das auf die Oberfläche dieses Kieselgsäuregels gesprüht wurde, innig vermischt. Man erhält auf diese Weise eine Aufbereitung des Wirkstoffs mit guter Haftfähigkeit.

VIII. 20 Teile der Verbindung Nr. 11 werden mit 2 Teilen Calciumsalz der Dodecylbenzolsulfonsäure, 8 Teilen Fettalkohol-polyglykolether, 2 Teilen Natriumsalz eines Phenol-Harnstoff-Formaldehyd-Kondensates und 68 Teilen eines paraffinischen Mineralöls innig vermischt. Man erhält eine stabile ölige Dispersion.

Bei der Formulierung der Wirkstoffe kommt einer Aufbereitung derselben in emulgierbarem Öl eine besondere Bedeutung zu, da dies zu einer allgemeinen Wirkungssteigerung für die Bekämpfung von krautigem Pflanzenwuchs bei Blattbehandlung führt.

Die Aufwandmengen können zwischen 0,01 und 10,0 kg Wirkstoff/ha und mehr schwanken. Sie richten sich nach dem jeweiligen Bekämpfungsziel und dem Stadium der unerwünschten Pflanzen. Vorzugsweise betragen sie 0,05 bis 3,0 kg Wirkstoff/ha.

Bei Kulturpflanzen, welche bei Blattbehandlung gegenüber den Wirkstoffen empfindlich sind, können auch Ausbringungstechniken angewandt werden, bei welchen die herbiziden Mittel mit Hilfe der Spritzgeräte so geleitet werden, daß die Blätter empfindlicher Kulturpflanzen nach Möglichkeit nicht getroffen werden, während sie auf die Blätter darunter wachsender unerwünschter Pflanzen oder die unbedeckte Bodenfläche gelangen (post-directed, lay-by). In Anbetracht der Vielseitigkeit der Applikationsmethoden können die erfindungsgemäßen Herbizide noch in einer weiteren großen Zahl von Kulturpflanzen zur Beseitigung unerwünschten Pflanzenwuchses eingesetzt werden.

In Betracht kommen beispielsweise folgende Kulturen :

| Botanischer Name | Deutscher Name |
|---|---|
| Allium cepa | Küchenzwiebel |
| Ananas comosus | Ananas |
| Arachis hypogaea | Erdnuß |
| Asparagus officinalis | Spargel |
| Avena sativa | Hafer |
| Beta vulgaris spp. altissima | Zuckerrübe |
| Beta vulgaris spp. rapa | Futterrübe |
| Beta vulgaris spp. esculenta | Rote Rübe |
| Brassica napus var. napus | Raps |
| Brassica napus var. napobrassica | Kohlrübe |
| Brassica napus var. rapa | Weiße Rübe |
| Brassica rapa var. silvestris | Rübsen |
| Camellia sinensis | Teestrauch |
| Carthamus tinctorius | Saflor-Färberdistel |

(Fortsetzung)

| Botanischer Name | Deutscher Name |
|---|---|
| Cary illinoinensis | Pekannußbaum |
| Citrus limon | Zitrone |
| Citrus maxima | Pampelmuse |
| Citrus reticulata | Mandarine |
| Citrus sinensis | Apfelsine, Orange |
| Coffea arabica (Coffea canephora, Coffea liberica) | Kaffee |
| Cucumis melo | Melone |
| Cucumis sativus | Gurke |
| Cynodon dactylon | Bermudagras |
| Daucus carota | Möhre |
| Elaeis guineensis | Ölpalme |
| Fragaria vesca | Erdbeere |
| Glyoine max | Sojabohne |
| Gossypium hirsutum (Gossypium arboreum Gossypium herbaceum Gossypium vitifolium) | Baumwolle |
| Helianthus annuus | Sonnenblume |
| Helianthus tuberosus | Topinambur |
| Hevea brasiliensis | Parakatuschukbaum |
| Hordeum vulgare | Gerste |
| Humulus lupulus | Hopfen |
| Ipomea batatas | Süßkartoffeln |
| Juglans regia | Walnußbaum |
| Lactua sativa | Kopfsalat |
| Lens culinaris | Linse |
| Linum usitatissimum | Faserlein |
| Lycopersicon lycopersicum | Tomate |
| Malus spp. | Apfel |
| Manihot esculenta | Maniok |
| Medicago sativa | Luzerne |
| Metha piperita | Pfefferminze |
| Musa spp. | Obst- und Mehlbanane |
| Nicotiana tabacum (N. rustica) | Tabak |
| Olea europaea | Ölbaum |
| Oryza sativa | Reis |
| Panicum miliaceum | Rispenhirse |
| Phaseolus lunatus | Mondbohne |
| Phaseolus mungo | Erdbohne |
| Phaseolus vulgaris | Buschbohnen |
| Pennisetum glaucum | Perl- oder Rohrkolbenhirst |
| Petroselinum crispum spp. tuberosum | Wurzelpetersilie |
| Picea abies | Rotfichte |
| Abies alba | Weißtanne |
| Pinus spp. | Kiefer |
| Pisum sativum | Gartenerbse |
| Prunus avium | Süßkirsche |
| Prunus domestica | Pflaume |
| Prunus dulcis | Mandelbaum |
| Prunus persica | Pfirsich |
| Pyrus communis | Birne |
| Ribes sylvestre | Rote Johannisbeere |
| Ribes uva-crispa | Stachelbeere |
| Ricinus communis | Rizinus |
| Saccharum officinarum | Zuckerrohr |
| Secale cereale | Roggen |
| Sasamum indicum | Sesam |
| Solanum tuberosum | Kartoffel |
| Sorghum bicolor (s. vulgare) | Mohrenhirse |
| Sorghum dochna | Zuckerhirse |
| Spinacia oleracea | Spinat |
| Theobroma cacao | Kakaobaum |
| Trifolium pratense | Rotklee |
| Triticum aestivum | Weizen |

(Fortsetzung)

| Botanischer Name | Deutscher Name |
| --- | --- |
| Vaccinium corymbosum | Kulturheidelbeere |
| Vaccinium vitis-idaea | Preißelbeere |
| Vicia faba | Pferdebohnen |
| Vigna sinensis (V. unguiculata) | Kuhbohne |
| Vitis vinifera | Weinrebe |
| Zea mays | Mais |

Zur Verbreiterung des Wirkungsspektrums und zur Erzielung synergistischer Effekte können die neuen Diphenylether sowohl unter sich als auch mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Diphenylether, Triazinone, Uracile, Benzofuranderivate, Cyclohexan-1,3-dionderivate und andere in Betracht. Eine Reihe von Wirkstoffen, welche zusammen mit den neuen Verbindungen für verschiedenste Anwendungsbereiche sinnvolle Mischungen ergeben, werden beispielhaft aufgeführt :

5-Amino-4-chlor-2-phenyl-3(2H)-pyridazinon
5-Amino-4-brom-2-phenyl-3(2H)-pyridazinon
5-Amino-4-chlor-2-cyclohexyl-3(2H)-pyridazinon
5-Amino-4-brom-2-cyclohexyl-3(2H)-pyridazinon

5-Methylamino-4-chlor-2-(3-trifluormethylphenyl)-3(2H)-pyridazinon
5-Methylamino-4-chlor-2-(3-, ,β,β-tetrafluorethoxyphenyl)-3(2H)-pyridazinon
5-Dimethylamino-4-chlor-2-phenyl-3(2H)-pyridazinon
4,5-Dimethoxy-2-phenyl-3(2H)-pyridazinon
4,5-Dimethoxy-2-cyclohexyl-3(2H)-pyridazinon
4,5-Dimethoxy-2-(3-trifluormethylphenyl)-3(2H)-pyridazinon
5-Methoxy-4-chlor-2-(3-trifluormethylphenyl)-3-(2H)-pyridazinon
5-Amino-4-brom-2-(3-methylphenyl)-3(2H)-pyridazinon

4,5-Dimethoxy-2-(3-, ,β-trifluor-β-bromethoxyphenyl)-3-(2H)-pyridazinon
3-(1-Methylethyl)-1H-2,1,3-benzothiadiazin-4(3H)-on-2,2-dioxid und Salze
3-(1-Methylethyl)-8-chlor-1H-2,1,3-benzothiadiazin-4(3H)-on-2,2-dioxid und Salze
3-(1-Methylethyl)-8-fluor-1H-2,1,3-benzothiadiazin-4(3H)-on-2,2-dioxid und Salze
3-(1-Methylethyl)-8-methyl-1H-2,1,3-benzothiadiazin-4(3H)-on-2,2-dioxid und Salze

1-Methoxymethyl-3-(1-methylethyl)-2,1,3-benzothiadiazin-4(3H)-on-2,2-dioxid
1-Methoxymethyl-8-chlor-3-(1-methylethyl)-2,1,3-benzothiadiazin-4(3H)-on-2,2-dioxid
1-Methoxymethyl-8-fluor-3-(1-methylethyl)-2,1,3-benzothiadiazin-4(3H)-on-2,2-dioxid
1-Cyan-8-chlor-3-(1-methylethyl)-2,1,3-benzothiadiazin-4(3H)-on-2,2-dioxid
1-Cyan-8-fluor-3-(1-methylethyl)-2,1,3-benzothiadiazin-4(3H)-on-2,2-dioxid
1-Cyan-8-methyl-3-(1-methylethyl)-2,1,3-benzothiadiazin-4(3H)-on-2,2-dioxid
1-Cyan-3-(1-methylethyl)-2,1,3-benzothiadiazin-4(3H)-on-2,2-dioxid
1-Azidomethyl-3-(1-methylethyl)-2,1,3-benzothiadiazin-4(3H)-on-2,2-dioxid
3-(1-Methylethyl)-1H-pyridino-[3,2-e] 2,1,3-thiadiazin-(4)-on-2,2-dioxid

N-(1-Ethylpropyl)-2,6-dinitro-3,4-dimethylanilin
N-(1-Methylethyl)-N-ethyl-2,6-dinitro-4-trifluormethylanilin
N-n-Propyl-N-β-chlorethyl-2,6-dinitro-4-trifluormethylanilin
N-n-Propyl-N-cyclopropylmethyl-2,6-dinitro-4-trifluormethyl-anilin
N-Bis-(n-propyl)-2,6-dinitro-3-amino-4-trifluormethylanilin
N-Bis-(n-propyl)-2,6-dinitro-4-methyl-anilin
N-Bis-(n-propyl)-2,6-dinitro-4-methylsulfonyl-anilin
N-Bis-(n-propyl)-2,6-dinitro-4-aminosulfonyl-anilin
Bis-(β-chlorethyl)-2,6-dinitro-4-methyl-anilin
N-Ethyl-N-(2-methylallyl)-2,6-dinitro-4-trifluormethylanilin

N-Methylcarbaminsäure-3,4-dichlorbenzylester
N-Methylcarbaminsäure-2,6-di-tert-butyl-4-methylphenylester
N-Phenylcarbaminsäure-isopropylester
N-3-Fluorphenylcarbaminsäure-3-methoxypropyl-2-ester
N-3-Chlorphenylcarbaminsäure-isopropylester

N-3-Chlorphenylcarbaminsäure-butin-1-yl-3-ester
N-3-Chlorphenylcarbaminsäure-4-chlor-butin-2-yl-1-ester
N-3,4-Dichlorphenylcarbaminsäure-methylester
N-(4-Amino-benzolsulfonyl)-carbaminsäure-methylester
O-(N-Phenylcarbamoyl)-propanonoxim
N-Ethyl-2-(phenylcarbamoyl)-oxypropionsäureamid
3'-N-Isopropyl-carbamoyloxy-propionanilid
Ethyl-N-(3-(N'-phenylcarbamoyloxy)-phenyl)-carbamat
Methyl-N-(3-(N'-methyl-N'-phenylcarbamoyloxy)-phenyl)-carbamat
Isopropyl-N-(3-(N'-ethyl-N'-phenylcarbamoyloxy)-phenyl)-carbamat
Methyl-N-(3-(N'-3-methylphenylcarbamoyloxy)-phenyl)-carbamat
Methyl-N-(3-(N'-4-fluorphenylcarbamoyloxy)-phenyl)-carbamat
Methyl-N-(3-(N'-3-chlor-4-fluorphenylcarbamoyloxy)-phenyl)-carbamat
Methyl-N-dichlorfluormethylsulfenyl-(3-(N'-dichlorfluormethylsulfenyl-N'-phenylcarbamoyl-oxy)-phenyl)-carbamat
Methyl-N-dichlorfluormethylsulfenyl-(3-(N'-dichlorfluormethylsulfenyl-N'-3-methylphenylcarbamoyl-oxy)-phenyl)-carbamat

Ethyl-N-(3-N'-3-chlor-4-fluorphenylcarbamoyloxy)-phenyl)-carbamat
Ethyl-N-(3-N'-3,4-difluorphenylcarbamoyloxy)-phenyl)-carbamat
Methyl-N-(3-(N'-3,4-difluorphenylcarbamoyloxy)-phenyl)-carbamat
N-3-(4-Fluorphenoxycarbonylamino)-phenyl-carbaminsäuremethylester
N-3-(2-Methylphenoxycarbonylamino)-phenyl-carbaminsäureethylester
N-3-(4-Fluorphenoxycarbonylamino)-phenyl-thiolcarbaminsäuremethylester
N-3-(2,4,5-Trimethylphenoxycarbonylamino)-phenyl-thiolcarbaminsäure-methylester
N-3-(Phenoxycarbonylamino)-phenyl-thiolcarbaminsäure-methylester
N,N-Diethyl-thiolcarbaminsäure-p-chlorbenzylester
N,N-Di-n-propyl-thiolcarbaminsäure-ethylester
N,N-Di-n-propyl-thiolcarbaminsäure-n-propylester
N,N-Di-isopropyl-thiolcarbaminsäure-2,3-dichlorallylester
N,N-di-isopropyl-thiolcarbaminsäure-2,3,3-trichlorallylester
N,N-Di-isopropyl-thiolcarbaminsäure-3-methyl-5-isoxazolylmethylester
N,N-Di-isopropyl-thiolcarbaminsäure-3-ethyl-5-isoxazolylmethylester
N,N-Di-sec.-butyl-thiolcarbaminsäure-ethylester
N,N-Di-sec.-butyl-thiolcarbaminsäure-benzylester
N-Ethyl-N-cyclohexyl-thiolcarbaminsäure-ethylester
N-Ethyl-N-bicyclo [2.2.1] heptyl-thiolcarbaminsäureethylester
S-(2,3-Dichlorallyl)-(2,2,4-trimethyl-azetidin)-1-carbothiolat
S-(2,3,3-Trichlorallyl)-(2,2,4-trimethyl-azetidin)-1-carbothiolat
S-Ethyl-hexahydro-1-H-azepin-1-carbothiolat
S-Benzyl-(3-methyl-hexahydro-1-H-azepin-1)-carbothiolat
S-Benzyl-(2,3-dimethylhexahydro-1-H-azepin-1)-carbothiolat
S-Ethyl-(3-methylhexahydro-1-H-azepin-1)-carbothiolat
N-Ethyl-N-n-butyl-thiolcarbaminsäure-n-propylester
N,N-Dimethyl-dithiocarbaminsäure-2-chlorallylester
N-Methyl-dithiocarbaminsäure-Natriumsalz
Trichloressigsäure-Natriumsalz
α,α-Dichlorpropionsäure-Natriumsalz
α,α-Dichlorbuttersäure-Natriumsalz
α,α,β,β-Tetrafluorpropionsäure-Natriumsalz
α-Methyl-α,β-dichlorpropionsäure-Natriumsalz
α-Chlor-β-(4-chlorphenyl)-propionsäure-methylester
α,β-Dichlor-β-phenylpropionsäure-methylester
Benzamido-oxy-essigsäure

2,3,5-Trijodbenzoesäure (Salze, Ester, Amide)
2,3,6-Trichlorbenzoesäure (Salze, Ester, Amide)
2,3,5,6-Tetrachlorbenzoesäure (Salze, Ester, Amide)
2-Methoxy-3,6-dichlorbenzoesäure (Salze, Ester, Amide)
2-Methoxy-3,5,6-trichlorbenzoesäure (Salze, Ester, Amide)
3-Amino-2,5,6-trichlorbenzoesäure (Salze, Ester, Amide)
O,S-Dimethyl-tetrachlor-thioterephthalat
Dimethyl-2,3,5,6-tetrachlor-terephthalat
Di-natrium-3,6-endoxohexahydro-phthalat
4-Amino-3,5,6-trichlor-picolinsäure (Salze)

2-Cyan-3-(N-methyl-N-phenyl)-amino-acrylsäureethylester
2-[4-(4'-Chlorphenoxy)-phenoxy]-propionsäureisobutylester
2-[4-(2',4'-Dichlorphenoxy)-phenoxy]-propionsäuremethylester
2-[4-(4'-Trifluormethylphenoxy)-phenoxy]-propionsäuremethylester
2-[4-(2'-Chlor-4'-trifluorphenoxy)-phenoxy]-propionsäure-Natriumsalz
2-[4-(3',5'-Dichlorpyridyl-2-oxy)-phenoxy]-propionsäure-Natriumsalz

2-(N-Benzoyl-3,4-dichlorphenylamino)-propionsäureethylester
2-(N-Benzoyl-3-chlor-4-fluorphenylamino)-propionsäuremethylester
2-(N-Benzoyl-3-chlor-4-fluorphenylamino)-propionsäureisopropylester
4[4-(4'-Trifluormethyl-phenoxy)]-penten-2-carbonsäureethylester

2-Chlor-4-ethylamino-6-isopropylamino-1,3,5-triazin
2-Chlor-4-ethylamino-6-(amino-2'-propionitril)-1,3,5-triazin
2-Chlor-4-ethylamino-6-2-methoxypropyl-2-amino-1,3,5-triazin
2-Chlor-4-ethylamino-6-butin-1-yl-2-amino-1,3,5-triazin
2-Chlor-4,6-bisethylamino-1,3,5-triazin
2-Chlor-4,6-bisisopropylamino-1,3,5-triazin
2-Chlor-4-isopropylamino-6-cyclopropylamino-1,3,5-triazin

2-Azido-4-methylamino-6-isopropylamino-1,3,5-triazin
2-Methylthio-4-ethylamino-6-isopropylamino-1,3,5-triazin
2-Methylthio-4-ethylamino-6-tert-butylamino-1,3,5-triazin
2-Methylthio-4,6-bisethylamino-1,3,5-triazin
2-Methylthio-4,6-bisisopropylamino-1,3,5-triazin
2-Methoxy-4-ethylamino-6-isopropylamino-1,3,5-triazin
2-Methoxy-4,6-bisethylamino-1,3,5-triazin
2-Methoxy-4,6-bisisopropylamino-1,3,5-triazin
4-Amino-6-tert.-butyl-3-methylthio-4,5-dihydro-1,2,4-triazin-5-on
4-Amino-6-phenyl-3-methyl-4,5-dihydro-1,2,4-triazin-5-on
4-Isobutylidenamino-6-tert. butyl-3-methylthio-4,5-dihydro-1,2,4-triazin-5-on
1-Methyl-3-cyclohexyl-6-dimethylamino-1,3,5-triazin-2,4-dion

3-tert.-Butyl-5-chlor-6-methyluracil
3-tert.-Butyl-5-brom-6-methyluracil
3-Isopropyl-5-brom-6-methyluracil
3-sec.-Butyl-5-brom-6-methyluracil
3-(2-Tetrahydropyranyl)-5-chlor-6-methyluracil
3-(2-Tetrahydropyranyl)-5,6-trimethylenuracil
3-Cyclohexyl-5,6-trimethylenuracil

2-Methyl-4-(3'-trifluormethylphenyl)-tetrahydro-1,2,4-oxadiazin-3,5-dion
2-Methyl-4-(4'-fluorphenyl)-tetrahydro-1,2,4-oxadiazin-3,5-dion
3-Amino-1,2,4-triazol
1-Allyloxy-1-(4-bromphenyl)-2-[1',2',4'-triazolyl-(1')]-ethan (Salze)
1-(4-Chlorphenoxy)-3,3-dimethyl-1-(1H-1,2,4-triazol-1-yl)-butan-2-on
N,N-Diallylchloracetamid
N-Isopropyl-2-chloracetanilid
N-(Butin-1-yl-3)-2-chloracetanilid

2'-Methyl-6'-ethyl-N-(propargyl)-2-chloracetanilid
2'-Methyl-6'-ethyl-N-(ethoxymethyl)-2-chloracetanilid
2'-Methyl-6'-ethyl-N-(2-methoxy-1-methylethyl)-2-chloracetanilid
2'-Methyl-6'-ethyl-N-(isopropoxycarbonylethyl)-2-chloracetanilid
2'-Methyl-6'-ethyl-N-(4-methoxypyrazol-1-yl-methyl)-2-chloracetanilid
2'-Methyl-6'-ethyl-N-(pyrazol-1-yl-methyl)-2-chloracetanilid
2',6'-Dimethyl-N-(pyrazol-1-yl-methyl)-2-chloracetanilid
2',6'-Diemethyl-N-(4-methylpyrazol-1-yl-methyl)-2-chloracetanilid
2',6'-Dimethyl-N-(pyrazol-1-yl-methylenoxymethyl)-2-chloracetanilid
2'-Methyl-6'-ethyl-N-(pyrazol-1-yl-methylenoxymethyl)-2-chloracetanilid
2'-Methyl-6'-ethyl-N-(pyrazol-1-yl-ethylenoxymethyl)-2-chloracetanilid
2',6'-Dimethyl-N-(1,2,4-triazol-1-yl-methyl)-2-chloracetanilid
2',6'-Dimethyl-N-(3,5-dimethylpyrazol-1-yl-methyl)-2-chloracetanilid
2',6'-Dimethyl-N-(1,3-dioxolan-2-yl-methyl)-2-chloracetanilid
2',6'-Dimethyl-N-(2-methoxyethyl)-2-chloracetanilid

2',6'-Dimethyl-N-isobutoxymethyl-2-chloracetanilid
2',6'-Diethyl-N-methoxymethyl-2-chloracetanilid
2',6'-Diethyl-N-(n-butoxymethyl)-2-chloracetanilid
2',6'-Diethyl-N-ethoxycarbonylmethyl-2-chloracetanilid
2',3',6'-Trimethyl-N-(pyrazol-1-yl-methyl)-2-chloracetanilid
2',3'-Dimethyl-N-isopropyl-2-chloracetanilid
2',6'-Diethyl-N-(2-n-propoxyethyl)-2-chloracetanilid

2-(2-Methyl-4-chlorphenoxy)-N-methoxy-acetamid
2-(α-Naphthoxy)-N,N-diethylpropionamid
2,2-Diphenyl-N,N-dimethylacetamid
N-Benzyl-N-isopropyl-trimethylacetamid
α-(3,4,5-Tribrompyrazol-1-yl)-N,N-dimethylpropionamid
N-(1,1-Dimethylpropinyl)-3,5-dichlorbenzamid
N-1-Naphthylphthalamidsäure
Propionsäure-3,4-dichloranilid
Cyclopropancarbonsäure-3,4-dichloranilid
Methacrylsäure-3,4-dichloranilid
N-(Pyrazol-1-yl-methyl)-pyrazol-1-yl-essigsäure-2,6-dimethylanilid
N-(Pyrazol-1-yl-methyl)-1,2,4-triazol-1-yl-essigsäure-2,6-dimethylanilid
1-(α-2,4-Dichlorphenoxypropionsäure)-3-(O-methylcarbamoyl)-anilid
1-(α-2-Brom-4-chlorphenoxypropionsäure)-3-(O-methylcarbamoyl)-anilid
2-Methylpentancarbonsäure-3,4-dichloranilid
5-Acetamido-2,4-dimethyl-trifluormethansulfonanilid
5-Acetamido-4-methyl-trifluormethansulfonanilid
N-4-Methyl-5-(trifluormethyl)-sulfonylamino-phenylacetamid
2-Propionyl-amino-4-methyl-5-chlor-thiazol
O-(Methylsulfonyl)-glykolsäure-N-ethoxymethyl-2,6-dimethylanilid
O-(Methylaminosulfonyl)-glykolsäure-N-isopropyl-anilid
O-(i-Propylaminosulfonyl)-glykolsäure-N-butin-1-yl-3-anilid
O-(Methylaminosulfonyl)-glykolsäure-hexamethylenimid
2,6-Dichlor-thiobenzamid
N-[4-Methoxy-6-methyl-1,3,5-triazin-2-yl-aminocarbonyl]-2-chlorbenzolsulfonamid
2,6-Dichlorbenzonitril
3,5-Dibrom-4-hydroxy-benzonitril (Salze)
3,5-Dijod-4-hydroxy-benzonitril (Salze)
3,5-Dibrom-4-hydroxy-0,2,4-dinitrophenylbenzaldoxim (Salze)
3,5-Dibrom-4-hydroxy-0-2-cyan-4-nitrophenylbenzaldoxim (Salze)
Pentachlorphenol-Natriumsalz
2,4-Dichlorphenyl-4'-nitrophenylether
2,4,6-Trichlorphenyl-4'-nitrophenylether
2-Fluor-4,6-dichlorphenyl-4'-nitrophenylether
2-Chlor-4-trifluormethylphenyl-4'-nitrophenylether

2,4'-Dinitro-4-trifluormethyl-diphenylether
2,4-Dichlorphenyl-3'-methoxy-4'-nitro-phenylether
2-Chlor-4-trifluormethylphenyl-3'-ethoxy-4'-nitro-phenyl-ether
2-Chlor-4-trifluormethylphenyl-3'-carboxy-4'-nitro-phenyl-ether (Salze)
2-Chlor-4-trifluormethylphenyl-3'-ethoxycarbonyl-4'-nitrophenylether
2-Chlor-4-trifluormethylphenyl-3'-(2-fluorethoxy)-4'-nitrophenylether
2-Chlor-4-trifluormethylphenyl-3'-ethoxycarbonyl-methylthio-4'-nitrophenylether
2-Chlor-4-trifluormethyl-3'-methoxycarbonyl-4'-nitrophenylether
2,4,6-Trichlorphenyl-3'-ethoxycarbonyl-methylthio-4'-nitrophenylether
2,4-Dichlorphenyl-3'-methoxycarbonyl-4'-nitro-phenylether
2,4-Dichlorphenyl-3'-carboxy-4'-nitrophenylether
2,4-Dichlorphenyl-3'-ethoxy-4'-nitrophenylether
2-(3,4-Dichlorphenyl)-4-methyl-1,2,4-oxadiazolidin-3,5-dion
2-(3-tert.-Butylcarbamoyloxy-phenyl)-4-methyl-1,2,4-oxadiazolidin-3,5-dion
2-(3-i-Propylcarbamoyloxy-phenyl)-4-methyl-1,2,4-oxadiazolidin-3,5-dion
(4-Bromphenyl)-3,4,5,9,10-pentaazatetracyclo-[5,4,1,$0^{2,6}$,$0^{8,11}$]-dodeca-3,9-dien
2,3-Dihydro-3,3-dimethyl-5-benzofuranyl-ethansulfonat
2-Ethoxy-2,3-dihydro-3,3-dimethyl-5-benzofuranyl-methansulfonat
2-Ethoxy-2,3-dihydro-3,3-dimethyl-5-benzofuranyl-dimethyl-aminosulfat
2-Ethoxy-2,3-dihydro-3,3-dimethyl-5-benzofuranyl-(N-methyl-N-acetyl)-aminosulfonat
3,4-Dichlor-1,2-benzisothiazol

N-4-Chlorphenyl-allylbernsteinsäureimid
2-Methyl-4,6-dinitrophenol (Salze, Ester)
2-sec.-Butyl-4,6-dinitrophenol (Salze, Ester)
2-sec.-Butyl-4,6-dinitrophenol-acetat
2-tert.-Butyl-4,6-dinitrophenol-acetat
2-tert.-Butyl-4,6-dinitrophenol (Salze)
2-tert.-Butyl-5-methyl-4,6-dinitrophenol (Salze)
2-tert.-Butyl-5-methyl-4,6-dinitrophenol-acetat

2-sec.-Amyl-4,6-dinitrophenol (Salze, Ester)
1-(α,α-Dimethylbenzyl)-3-(4-methylphenyl)-harnstoff
1-Phenyl-3-(2-methylcyclohexyl)-harnstoff
1-Phenyl-1-benzoyl-3,3-dimethyl-harnstoff
1-(4-Chlorphenyl)-1-benzoyl-3,3-dimethyl-harnstoff
1-(4-Chlorphenyl)-3,3-dimethyl-harnstoff
1-(4-Chlorphenyl)-3-methyl-3-butin-1-yl-3-harnstoff
1-(3,4-Dichlorphenyl)-3,3-dimethyl-harnstoff
1-(3,4-Dichlorphenyl)-1-benzoyl-3,3-dimethyl-harnstoff
1-(3,4-Dichlorphenyl)-3-methyl-3-n-butyl-harnstoff
1-(4-i-Propylphenyl)-3,3-dimethyl-harnstoff
1-(3-Trifluormethylphenyl)-3,3-dimethyl-harnstoff
1-(3-α,α,β,β-Tetrafluorethoxyphenyl)-3,3-dimethyl-harnstoff

1-(3-tert.-Butylcarbamoyloxy-phenyl)-3,3-dimethyl-harnstoff
1-(3-Chlor-4-methylphenyl)-3,3-dimethyl-harnstoff
1-(3-Chlor-4-methoxyphenyl)-3,3-dimethyl-harnstoff
1-(3-Chlor-4-ethoxy-phenyl)-3,3-dimethyl-harnstoff
1-(3,5-Dichlor-4-methoxyphenyl)-3,3-dimethyl-harnstoff
1-[4-(4'-Chlorphenoxy)-phenyl]-3,3-dimethyl-harnstoff
1-[4-(4'-Methoxyphenoxy)-phenyl]-3,3-dimethyl-harnstoff
1-Cyclooctyl-3,3-dimethyl-harnstoff
1-(Hexahydro-4,7-methanindan-5-yl)-3,3-dimethyl-harnstoff
1-[1- oder 2-(3a,4,5,7,7a-Hexahydro)-4,7-methanoindanyl]-3,3-dimethyl-harnstoff
1-(4-Fluorphenyl)-3-carboxymethoxy-3-methyl-harnstoff
1-Phenyl-3-methyl-3-methoxy-harnstoff
1-(4-Chlorphenyl)-3-methyl-3-methoxy-harnstoff
1-(4-Bromphenyl)-3-methyl-3-methoxy-harnstoff
1-(3,4-Dichlorphenyl)-3-methyl-3-methoxy-harnstoff
1-(3-Chlor-4-isopropylphenyl)-3-methyl-3-methoxy-harnstoff
1-(3-Chlor-4-methoxyphenyl)-3-methyl-3-methoxy-harnstoff
1-(3-tert.-Butylphenyl)-3-methyl-3-methoxy-harnstoff
1-(2-Benzthiazolyl)-1,3-dimethyl-harnstoff
1-(2-Benzthiazolyl)-3-methyl-harnstoff
1-(5-Trifluormethyl-1,3,4-thiadiazolyl)-1,3-dimethyl-harnstoff
1-(4-Benzyloxyphenyl)-3-methyl-3-methoxy-harnstoff
Imidazolidin-2-on-1-carbonsäure-isobutylamid
1-[4-(2-(p-Methylphenyl)-ethoxy)-phenyl]-3-methyl-3-methoxy-harnstoff
1,2-Dimethyl-3,5-diphenylpyrazolium-methylsulfat
1,2,4-Trimethyl-3,5-diphenylpyrazolium-methylsulfat
1,2-Dimethyl-4-brom-3,5-diphenylpyrazolium-methylsulfat
1,3-Dimethyl-4-(3,4-dichlorbenzoyl)-5-[(4-methylphenyl)-sulfonyloxy]-pyrazol
1-Acetyl-3-anilino-4-methoxycarbonyl-5-methyl-pyrazol
3-Anilino-4-methoxycarbonyl-5-methyl-pyrazol
3-tert.-Butylamino-4-methoxycarbonyl-5-methyl-pyrazol
2,3,5-Trichlor-pyridinol-(4)
2-Chlor-3,5-diiod-4-acetoxy-pyridin
1-Methyl-3-phenyl-5-(3'-trifluormethylphenyl)-pyridon-(4)
1-Methyl-4-phenyl-pyridiniumchlorid
1,1-Dimethylpyridiniumchlorid
3-Phenyl-4-hydroxy-6-chlorpyridazin
1,1'-Dimethyl-4,4'-dipyridylium-di-methylsulfat
1,1'-Di-(3,5-dimethylmorpholin-carbonylmethyl)-4,4'-dipyridylium-dichlorid
1,1'-Ethylen-2,2'-dipyridylium-dibromid
2-Chlorphenoxyessigsäure (Salze, Ester, Amide)
4-Chlorphenoxyessigsäure (Salze, Ester, Amide)

2,4-Dichlorphenoxyessigsäure (Salze, Ester, Amide)
2,4,5-Trichlorphenoxyessigsäure (Salze, Ester, Amide)
2-Methyl-4-chlorphenoxyessigsäure (Salze, Ester, Amide)

3,5,6-Trichlor-2-pyridinyl-oxyessigsäure (Salze, Ester, Amide)

α-Naphthoxyessigsäuremethylester
2-[4-(5'-Brompyridyl-2-oxy)-phenoxy]-propionsäureethylester
2-[4-(5'-Iodpyridyl-2-oxy)-phenoxy]-propionsäureethylester
2-[4-(5'-Iodpyridyl-2-oxy)-phenoxy]-propionsäure-n-butylester
2-(2-Methylphenoxy)-propionsäure (Salze, Ester, Amide)
2-(4-Chlorphenoxy)-propionsäure (Salze, Ester, Amide)
(2-Methyl-4-chlor-phenoxy)-thioessigsäure-ethylester
2-(2,4-Dichlorphenoxy)-propionsäure (Salze, Ester, Amide)
2-(2,4,5-Trichlorphenoxy)-propionsäure (Salze, Ester, Amide)
2-(2-Methyl-4-chlorphenoxy)-propionsäure (Salze, Ester, Amide)
2-[4-(4'-Chlorphenoxymethyl)-phenoxy]-propionsäuremethylester
4-(2,4-Dichlorphenoxy)-buttersäure (Salze, Ester, Amide)
4-(2-Methyl-4-chlorphenoxy)-buttersäure (Salze, Ester, Amide)
Cyclohexyl-3-(2,4-dichlorphenoxy)-acrylat
9-Hydroxyfluoren-carbonsäure-(9) (Salze, Ester)
2,3,6-Trichlorphenyl-essigsäure (Salze, Ester)
4-Chlor-2-oxo-benzothiazolin-3-yl-essigsäure (Salze, Ester)
3-[1-(N-ethoxyamino)-propyliden]-6-ethyl-3,4-dihydro-2-H-pyran-2,4-dion
3-[1-(N-Allyloxyamino)-propyliden]-6-ethyl-3,4-dihydro-2-H-pyran-2,4-dion
2-[1-(N-Allyloxyamino)-propyliden]-5,5-dimethylcyclohexan-1,3-dion (Salze)
2-[1-(N-Allyloxyamino)-butyliden]-5,5-dimethylcyclohexan-1,3-dion (Salze)
2-[1-(N-Allyloxyamino)-butyliden]-5,5-dimethyl-4-methoxy-carbonyl-cyclohexan-1,3-dion (Salze)
2-[1-(N-ethoxyamino)-butyliden]-5-(2-ethylthiopropyl)-3-hydroxy-cyclohexen-(2)-on-(1) (Salze)
2-[1-(N-ethoxamino)-butyliden]-5-(2-phenylthiopropyl)-3-hydroxy-cyclohexen-(2)-on-(1) (Salze)

Gibellerinsäure (Salze)
Dinatrium-methylarsonat
Mononatriumsalz der Methylarsonsäure
N-Phosphon-methyl-glycin (Salze)
N,N-Bis-(phosphonmethyl)-glycin (Salze)
2-Chlorethanphosphonsäure-2-chlorethylester
Ammonium-ethyl-carbamoyl-phosphonat
Di-n-butyl-1-n-butylamino-cyclohexyl-phosphonat
Trithiobutylphosphit
O,O-Diisopropyl-5-(2-benzosulfonylamino-ethyl)-phosphordithionat
2,3-Dihydro-5,6-dimethyl-1,4-dithiin-1,1,4,4-tetraoxid
5-tert.-Butyl-3-(2,4-dichlor-5-isopropoxyphenyl)-1,3,4-oxadiazolon-(2)
4,5-Dichlor-2-trifluormethyl-benzimidazol (Salze)
1,2,3,6-Tetrahydropyridazin-3,6-dion (Salze)
Bernsteinsäure-mono-N-dimethylhydrazid (Salze)
(2-Chlorethyl)-trimethyl-ammoniumchlorid
(2-Methyl-4-phenylsulfonyl)-trifluormethansulfonanilid
(2-Chlorethyl)-trimethyl-ammoniumchlorid
(2-Methyl-4-phenylsulfonyl)-trifluormethansulfonanilid
1,1-Dimethyl-4,6-diisopropyl-5-indanylethylketon
2-[1-(2,5-Dimethylphenyl)-ethylsulfonyl]-pyridin-N-oxid
2-(3'-Trifluormethyl-phenyl)-4H-3,1-benzoxazin-4-on
2-(2-Thienyl)-4H-3,1-benzoxazin-4-on
2-Phenyl-4H-3,1-benzoxazin-4-on
Natriumchlorat
Ammoniumrhodanid
Calciumcyanamid

Außerdem ist es nützlich, die erfindungsgemäßen Mittel allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- oder Spurenelementmängeln eingesetzt werden.

Zur Aktivierung der herbiziden Wirkung können auch Netz- und Haftmittel sowie nicht-phytotoxische Öle und Ölkonzentrate zugesetzt werden.

Der Einfluß der herbiziden Diphenylether der Formel I auf das Wachstum von erwünschten und unerwünschten Pflanzen wird anhand von Gewächshaus- und Freilandversuchen gezeigt :

Als Vergleichsmittel wird der aus DE-A-2 311 638 bekannte Wirkstoff

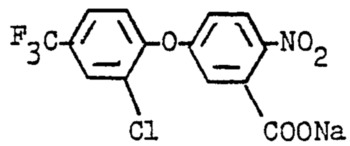

(A)

eingesetzt.

Bei den Versuchen wurden folgende Pflanzen getestet :

Amaranthus spp. (zurückgekrümmter Fuchsschwanz), Chenopodium album (Weißer Gänsefuß), Euphorbia geniculata (Süd-amerik. Wolfsmilchart), Galium aparine (Klettenlabkraut), Ipomoea spp. (Prunkwindearten), Lamium spp. (Taubnessel), Polygonum spp. (Flohknöterich), Raphanus raphanistrum (Hederich), Solanum nigrum (Schwarzer Nachtschatten), Sinapis alba (weißer Senf), Triticum aestivum (Weizen), Sinapis arvensis (Ackersenf).

Als Kulturgefäße für die Gewächshausversuche dienten Plastikblumentöpfe mit 300 $cm^3$ Inhalt und lehmigem Sand mit etwa 1,5 % Humus als Substrat. Die Samen der Testpflanzen wurden nach Arten getrennt flach eingesät. Unmittelbar danach erfolgte bei Vorauflaufbehandlung das Aufbringen der Wirkstoffe auf die Erdoberfläche. Sie wurden hierbei in Wasser als Verteilungsmittel suspendiert oder emulgiert und mittels fein verteilender Düsen gespritzt. Bei dieser Applikationsmethode betrug die Aufwandmenge 3,0 kg Wirkstoff/ha. Nach dem Aufbringen der Mittel wurden die Gefäße leicht beregnet, um Keimung und Wachstum in Gang zu bringen. Danach deckte man die Gefäße mit durchsichtigen Plastikhauben ab, bis die Pflanzen angewachsen waren. Die Abdeckung bewirkte ein gleichmäßiges Keimen der Testpflanzen, sofern dies nicht durch die Wirkstoffe beeinträchtigt wurde.

Zum Zwecke der Nachauflaufbehandlung wurden die Testpflanzen je nach Wuchsform zuerst bis zu einer Wuchshöhe von 3 bis 15 cm angezogen und dann behandelt. Die für die Nachauflaufanwendung benutzten Reispflanzen wurden in einem mit Torfmull (peat) angereicherten Substrat angezogen. Zur Nachauflaufbehandlung wurden entweder direkt gesäte und in den gleichen Gefäßen aufgewachsene Pflanzen ausgewählt, oder die Pflanzen wurden erst als Keimpflanzen getrennt angezogen und einige Tage vor der Behandlung in die Versuchsgefäße verpflanzt. Die Aufwandmengen für die Nachauflaufbehandlung variierten je nach Wirkstoff. Sie betrugen im Einzelfall 0,06, 0,125, 0,25 und 3,0 kg Wirkstoff/ha.

Eine Abdeckung unterblieb bei der Nachauflaufbehandlung. Die Aufstellung der Versuche erfolgte im Gewächshaus, wobei für wärmeliebende Arten wärmere Bereiche (20 bis 35 °C) und für solche gemäßigter Klimate 10 bis 25 °C bevorzugt wurden. Die Versuchsperiode erstreckte sich über 2 bis 4 Wochen. Während dieser Zeit wurden die Pflanzen gepflegt und ihre Reaktion auf die einzelnen Behandlungen ausgewertet. Bewertet wurde nach einer Skala von 0 bis 100. Dabei bedeutet 0 keine Schädigung oder normaler Auflauf und 100 kein Aufgang der Pflanzen bzw. völlige Zerstörung zumindest der oberirdischen Teile.

Bei den Freilandversuchen handelt es sich um Kleinparzellenversuche auf Standorten mit lehmigem Sand von etwa pH 6 und 1 bis 1,5 % Humusgehalt. Die Kulturpflanzen wurden für die Nachauflaufbehandlungen in Reihen gesägt. Die Unkrautflora war natürlich vorkommend. Die Substanzen wurden in Wasser als Träger- und Verteilungsmedium emulgiert oder suspendiert und mit Hilfe einer motorgetriebenen, auf einen Traktor montierten, Parzellenspritze ausgebracht. Das Wintergetreide befand sich zur Zeit der Behandlung im Stadium der Bestockung (tillering) und hatte eine Höhe von durchschnittlich 15 cm. Die Unkräuter befanden sich in der Rosette, hatten somit mehrere echte Blätter, Verzweigungen oder Blattquirle und waren etwa 3 bis 10 cm hoch.

Die Versuche zeigen, daß die Verbindungen bei Nachauflaufanwendung bei einer Reihe von unerwünschten Pflanzen eine bessere herbizide Aktivität zeigen als die Vergleichsmittel. Einige der erfindungsgemäßen Verbindungen zeigen darüberhinaus auch eine günstigere Verträglichkeit gegenüber bestimmten Kulturpflanzen. Bei Vorauflaufanwendung wird ebenfalls eine herbizide Wirkung beobachtet.

Bei der Prüfung auf selektive herbizide Wirkung be. Nachauflaufanwendung im Gewächshaus zeigt der Wirkstoff Nr. 1 bei niedrigen Aufwandmengen eine wesentlich bessere herbizide Wirkung und gleichzeitig eine wesentlich bessere Kulturpflanzenverträglichkeit als das in höheren Aufwandmengen eingesetzte Vergleichsmittel A.

Die Wirkstoffe Nr. 2, 3, 7 und 8 zeigten ebenfalls bei Nachauflaufbehandlung im Gewächshaus eine gute Wirkung gegen unerwünschte Pflanzen.

Die Verbindungen Nr. 1 und 8 zeigten auch bei Vorauflaufbehandlung im Gewächshaus eine gute herbizide Wirkung.

In den Freilandversuchen zeigte der Wirkstoff Nr. 1 bei Nachauflaufanwendung bei niedrigen Aufwandmengen gegen einzelne breitblättrige Unkrautarten eine sehr gute Aktivität und gleichzeitig eine gute Verträglichkeit für Winterweizen mit gerinfügigen temporären Blattverbrennungen.

**Patentansprüche** (für die Vertragsstaaten : BE, CH, DE, FR, GB, IT, LI, LU, NL, SE)

1. Diphenylether der Formel I

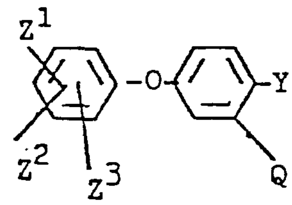

(I)

in der

$Z^1$ für Halogen, Nitro, Alkyl mit 1 bis 4 Kohlenstoffatomen, Halogenalkyl, Alkoxy, Halogenalkoxy, Alkylmercapto, Halogenalkylmercapto oder Halogenalkylsulfonyl mit jeweils 1 bis 4 Kohlenstoffatomen in der Alkylgruppe,

$Z^2$ und $Z^3$ jeweils unabhägig voneinander für Wasserstoff, Halogen, Nitro, Alkyl mit 1 bis 4 Kohlenstoffatomen, Halogenalkyl, Alkoxy, Halogenalkoxy, Alkylmercapto, Halogenalkylmercapto oder Halogenalkylsulfonyl mit jeweils 1 bis 4 Kohlenstoffatomen in der Alkylgruppe,

Y für Wasserstoff oder Nitro und

Q für den Rest —CO—NA—$OR^1$, wobei

A Wasserstoff, Alkyl mit 1 bis 4 Kohlenstoffatomen, ein Metallion oder ein gegebenenfalls substituiertes Ammoniumion und

$R^1$ Carboxyalkyl oder Alkoxycarbonylalkyl mit bis zu 10 Kohlenstoffatomen bedeuten.

2. Diphenylether der Formel I gemäß Anspruch 1, dadurch gekennzeichnet, daß

$Z^1$, $Z^2$ und $Z^3$ in 2,4,6-, 3,4,6- oder 3,4,5-Stellung am Phenyl jeweils unabhängig voneinander für Halogen, Halogenalkyl oder Halogenalkylmercapto mit jeweils 1 bis 4 Kohlenstoffatomen und $Z^2$ und $Z^3$ außerdem für Wasserstoff,

Y für Wasserstoff oder Nitro und

Q für den Rest —CO—NA—$OR^1$ stehen, wobei

A Wasserstoff oder Alkyl mit 1 bis 4 Kohlenstoffatomen und

$R^1$ Carboxyalkyl oder Alkoxycarbonylalkyl mit bis zu 6 Kohlenstoffatomen bedeuten.

3. Diphenylether der Formel I gemäß Anspruch 1, dadurch gekennzeichnet, daß

$Z^1$, $Z^2$ und $Z^3$ in 2,4,6- oder 3,4,5-Stellung jeweils unabhängig voneinander für Halogen oder Halogenalkyl mit 1 bis 4 Kohlenstoffatomen und $Z^2$ und $Z^3$ außerdem für Wasserstoff,

Y für Wasserstoff oder Nitro und

Q für den Rest —CO—NA—O—$R^1$ stehen, wobei

A Wasserstoff und

$R^1$ Alkoxycarbonylalkyl mit bis zu 6 Kohlenstoffatomen bedeuten.

4. 3-(2'-Chlor-4'-trifluormethylphenoxy)-6-nitro-benzhydroxamsäure-(α-methoxycarbonyl)-ethylether.

5. 3-(2'-Chlor-4'-trifluormethylphenoxy)-benzhydroxamsäure-(α-methoxycarbonyl)-methylether.

6. 3-(2'-Chlor-4'-trifluormethylphenoxy)-benzhydroxamsäure-(α-methoxycarbonyl)-ethylether.

7. 3-(2'-Chlor-4'-trifluormethylphenoxy)-6-nitro-benzhydroxamsäure-α-methoxycarbonyl)-methylether.

8. Verfahren zur Herstellung von Diphenylethern der Formel I gemäß Anspruch 1, dadurch gekennzeichnet, daß man

a) ein Säurechlorid der Formel II

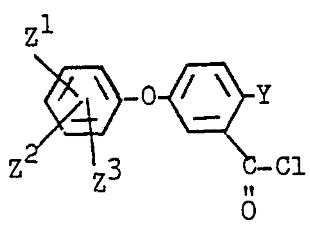

(II)

in der $Z^1$, $Z^2$, $Z^3$ und Y die im Anspruch 1 genannten Bedeutungen haben, mit einem O-substituierten Hydroxylamin der Formel III

$$H_2NOR^1 \qquad (III)$$

in der $R^1$ die im Anspruch 1 genannte Bedeutung hat, gegebenenfalls in Gegenwart eines Säureacceptors und eines inerten Lösungsmittels bei einer Temperatur im Bereich von − 10 bis + 120 °C oder

b) die Hydroxamsäure der Formel IV

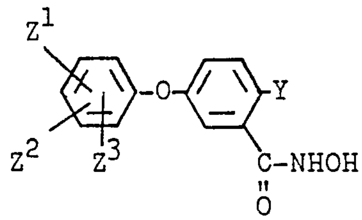

(IV)

in der $Z^1$, $Z^2$, $Z^3$ und Y die im Anspruch 1 genannten Bedeutungen haben, mit einer Halogenverbindung der Formel V

Hal—$R^1$ (V)

in der $R^1$ die im Anspruch 1 genannte Bedeutung hat und Hal für Halogen steht, in Gegenwart eines Säure-acceptors und eines inerten organischen Lösungsmittels bei einer Temperatur im Bereich von 0 bis 150 °C oder

c) die Hydroxamsäure der Formel VI

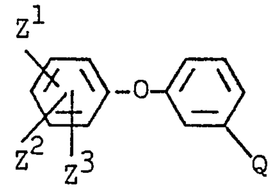

(VI)

in der $Z^1$, $Z^2$ und $Z^3$ die im Anspruch 1 genannten Bedeutungen haben und Q für den Rest —CO—NA—$OR^1$ steht, wobei A Wasserstoff bedeutet und $R^1$ die im Anspruch 1 genannten Bedeutungen hat, mit einem Nitriergemisch, bestehend aus konzentrierter Salpetersäure oder Alkalinitrat und konzentrierter Schwefelsäure, gegebenenfalls in Gegenwart eines organischen Lösungsmittels bei einer Temperatur im Bereich von − 10 bis + 15 °C umsetzt.

9. Herbizid, enthaltend einen Diphenylether der Formel I gemäß Anspruch 1.

10. Herbizid, enthaltend inerte Zusatzstoffe und einen Diphenylether der Formel I gemäß Anspruch 1.

11. Verfahren zur Bekämpfung unerwünschten Pflanzenwachstums, dadurch gekennzeichnet, daß man die unerwünschten Pflanzen oder von unerwünschtem Pflanzenwachstum freizuhaltende Fläche mit einer herbizid wirksamen Menge eines Diphenylethers der Formel I gemäß Anspruch 1 behandelt.

**Patentansprüche** (für den Vertragsstaat AT)

1. Herbizid, enthaltend inerte Zusatzstoffe und einen Diphenylether der Formel I

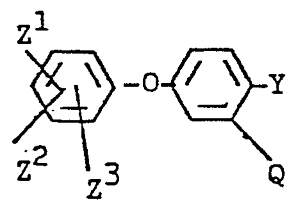

(I)

in der

$Z^1$ für Halogen, Nitro, Alkyl mit 1 bis 4 Kohlenstoffatomen, Halogenalkyl, Alkoxy, Halogenalkoxy, Alkylmercapto, Halogenalkylmercapto oder Halogenalkylsulfonyl mit jeweils 1 bis 4 Kohlenstoffatomen in der Alkylgruppe,

$Z^2$ und $Z^3$ jeweils unabhängig voneinander für Wasserstoff, Halogen, Nitro, Alkyl mit 1 bis 4 Kohlenstoffatomen, Halogenalkyl, Alkoxy, Halogenalkoxy, Alkylmercapto, Halogenalkylmercapto oder Halogenalkylsulfonyl mit jeweils 1 bis 4 Kohlenstoffatomen in der Alkylgruppe,

Y für Wasserstoff oder Nitro und

Q für den Rest —CO—NA—$OR^1$, wobei

A Wasserstoff, Alkyl mit 1 bis 4 Kohlenstoffatomen, ein Metallion oder ein gegebenenfalls substituiertes Ammonium und

$R^1$ Carboxyalkyl oder Alkoxycarbonylalkyl mit bis zu 10 Kohlenstoffatomen bedeuten, als Wirkstoff.

2. Herbizid, enthaltend inerte Zusatzstoffe und einen Diphenylether der Formel I gemäß anspruch 1, in der

$Z^1$, $Z^2$ und $Z^3$ in 2,4,6-, 3,4,6- oder 3,4,5-Stellung am Phenyl jeweils unabhängig voneinander für

Halogen, Halogenalkyl oder Halogenalkylmercapto mit jeweils 1 bis 4 Kohlenstoffatomen und $Z^2$ und $Z^3$ außerdem für Wasserstoff,

Y für Wasserstoff, oder Nitro und

Q für den Rest —CO—NA—$OR^1$ stehen, wobei

A Wasserstoff oder Alkyl mit 1 bis 4 Kohlenstoffatomen und

$R^1$ Carboxyalkyl oder Alkoxycarbonylalkyl mit bis zu 6 Kohlenstoffatomen bedeuten, als Wirkstoff.

3. Herbizid, enthaltend inerte Zusatzstoffe und einen Diphenylether der Formel I gemäß Anspruch 1, in der

$Z^1$, $Z^2$ und $Z^3$ in 2,4,6- oder 3,4,5-Stellung jeweils unabhängig voneinander für Halogen oder Halogenalkyl mit 1 bis 4 Kohlenstoffatomen und $Z^2$ und $Z^3$ außerdem für Wasserstoff,

Y für Wasserstoff oder Nitro und

Q für den Rest —CO—NA—$OR^1$ stehen, wobei

A Wasserstoff und

$R^1$ Alkoxycarbonylalkyl mit bis zu 6 Kohlenstoffatomen bedeuten, als Wirkstoff

4. Herbizid, enthaltend inerte Zusatzstoffe und 3-(2'-Chlor-4'-trifluormethylphenoxy)-6-nitro-benzhydroxamsäure-(α-methoxycarbonyl)-ethylether als Wirkstoff.

5. Herbizid, enthaltend inerte Zusatzstoffe und 3-(2'-Chlor-4'-trifluormetylphenoxy)-benzhydroxamsäure-(α-methoxycarbonyl)-methylether als Wirkstoff.

6. Herbizid, enthaltend inerte Zusatzstoffe und 3-(2'-Chlor-4'-trifluormethylphenoxy)-benzhydroxamsäure-(α-methoxycarbonyl)-ethylether als Wirkstoff.

7. Herbizid, enthaltend inerte Zusatzstoffe und 3-(2'-Chlor-4'-trifluormethylphenoxy)-6-nitro-benzhydroxamsäure-(α-methoxycarbonyl)-methylether als Wirkstoff.

8. Verfahren zur Herstellung von Diphenylethern der Formel I gemäß Anspruch 1, dadurch gekennzeichnet, daß man

a) ein Säurechlorid der Formel II

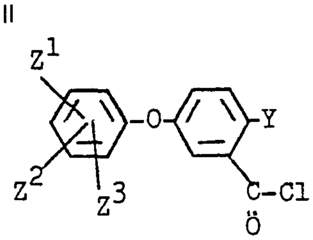

(II)

in der $Z^1$, $Z^2$, $Z^3$ und Y die im Anspruch 1 genannten Bedeutungen haben, mit einem O-substituierten Hydroxylamin der Formel III

$$H_2NOR^1 \qquad (III)$$

in der $R^1$ die im Anspruch 1 genannte Bedeutung hat, gegebenenfalls in Gegenwart eines Säureacceptors und eines inerten Lösungsmittels bei einer Temperatur im Bereich von − 10 bis + 120 °C oder

b) die Hydroxamsäure der Formel IV

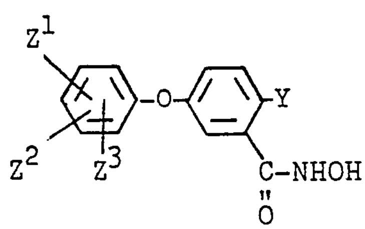

(IV)

in der $Z^1$, $Z^2$, $Z^3$ und Y die im Anspruch 1 genannten Bedeutungen haben, mit einer Halogenverbindung der Formel V

$$Hal—R^1 \qquad (V)$$

in der $R^1$ die im Anspruch 1 genannte Bedeutung hat und Hal für Halogen steht, in Gegenwart eines Säureacceptors und eines inerten organischen Lösungsmittels bei einer Temperatur im Bereich von 0 bis 150 °C oder

c) die Hydroxamsäure der Formel VI

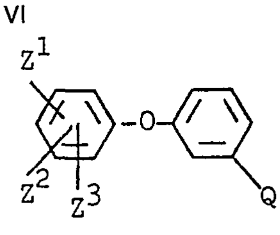

(VI)

in der $Z^1$, $Z^2$ und $Z^3$ die im Anspruch 1 genannten Bedeutungen haben und Q für den Rest —CO—NA—$OR^1$ steht, wobei A Wasserstoff bedeutet und $R^1$ die im Anspruch 1 genannten Bedeutungen hat, mit einem Nitriergemisch, bestehend aus konzentrierter Salpetersäure oder Alkalinitrat und konzentrierter Schwefelsäure, gegebenenfalls in Gegenwart eines organischen Lösungsmittels bei einer Temperatur im Bereich von − 10 bis + 15 °C umsetzt.

9. Verfahren zur Bekämpfung unerwünschten Pfanzenwachstums, dadurch gekennzeichnet, daß man die unerwünschten Pflanzen oder von unerwünschtem Pflanzenwachstum freizuhaltende Fläche mit einer herbizid wirksamen Menge eines Diphenylethers der Formel I gemäß Anspruch 1 behandelt.

**Claims** (for the Contracting States : BE, CH, DE, FR, GB, IT, LI, LU, NL, SE)

1. A diphenyl ether of the formula I

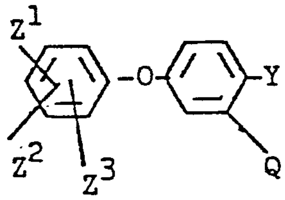

(I)

where

$Z^1$ is halogen, nitro, alkyl of 1 to 4 carbon atoms, or haloalkyl, alkoxy, haloalkoxy, alkylmercapto, haloalkylmercapto or haloalkylsulfonyl, where alkyl is in each case of 1 to 4 carbon atoms,

$Z^2$ and $Z^3$, independently of one another, are each hydrogen, halogen, nitro, alkyl of 1 to 4 carbon atoms, or haloalkyl, alkoxy, haloalkoxy, alkylmercapto, haloalkylmercapto or haloalkylsulfonyl, where alkyl is in each case of 1 to 4 carbon atoms,

Y is hydrogen or nitro, and

Q is —CO—NA—$OR^1$, where

A is hydrogen, alkyl of 1 to 4 carbon atoms, a metal ion or an unsubstituted or substituted ammonium ion, and

$R^1$ is carboxyalkyl or alkoxycarbonylalkyl of up to 10 carbon atoms.

2. A diphenyl ether of the formula I as claimed in claim 1, where

$Z^1$, $Z^2$ and $Z^3$ in the 2-, 4- and 6-, or 3-, 4- and 6-, or 3-, 4- and 5-positions on the phenyl ring, independently of one another, are halogen, or haloalkyl or haloalkylmercapto, each of 1 to 4 carbon atoms, and $Z^2$ and $Z^3$ are also hydrogen,

Y is hydrogen or nitro, and

Q is —CO—NA—$OR^1$, where

A is hydrogen or alkyl of 1 to 4 carbon atoms, and

$R^1$ is carboxyalkyl or alkoxycarbonylalkyl of up to 6 carbon atoms.

3. A diphenyl ether of the formula I as claimed in claim 1, where

$Z^1$, $Z^2$ and $Z^3$ in the 2-, 4- and 6-, or 3-, 4- and 5-positions, independently of one another, are halogen or haloalkyl of 1 to 4 carbon atoms, and $Z^2$ an $Z^3$ are also hydrogen,

Y is hydrogen or nitro, and

Q is —CO—NA—$OR^1$, where

A is hydrogen, and

$R^1$ is alkoxycarbonylalkyl of up to 6 carbon atoms.

4. 3-(2'-Chloro-4'-trifluoromethylphenoxy)-6-nitro-benz-hydroxamic acid-(α-methoxycarbonyl)-ethylether.

5. 3-(2'-Chloro-4'-trifluoromethylphenoxy)-benz-hydroxamic acid-(α-methoxycarbonyl)-methylether.

6. 3-(2'-Chloro-4'-trifluoromethylphenoxy)-benz-hydroxamic acid-(α-methoxycarbonyl)-ethylether.

7. 3-(2'-Chloro-4'-trifluoromethylphenoxy)-6-nitro-benz-hydroxamic acid-(α-methoxycarbonyl)-methylether.

8. A process for the manufacture of a diphenyl ether of the formula I as claimed in claim 1, wherein

a) an acid chloride of the formula II

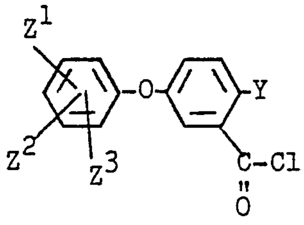

(II)

where $Z^1$, $Z^2$, $Z^3$ and Y have the meanings given in claim 1, is reacted with an O-substituted hydroxylamine of the formula III

$$H_2N—O—R^1 \qquad (III)$$

where $R^1$ has the meanings given in claim 1, in an inert organic solent, in the presence or absence of an acid acceptor, and at from − 10 to + 120 °C, or

b) a hydroxamic acid of the formula IV

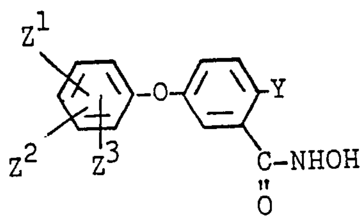

(IV)

where $Z^1$, $Z^2$, $Z^3$ and Y have the meanings given in claim 1, is reacted with a halogen compound of the formula V

$$Hal—R^1 \qquad (V)$$

where $R^1$ has the meanings given in claim 1 and Hal is halogen, in an inert organic solvent, in the presence of an acid acceptor, and at from 0 to 150 °C, or

c) a hydroxamic acid of the formula VI

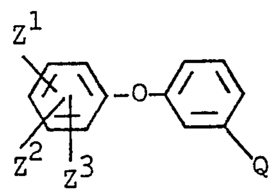

(VI)

where $Z^1$, $Z^2$ and $Z^3$ have the meaning given in claim 1, and Q is —CO—NA—$OR^1$, where A is hydrogen and $R^1$ has the meanings given in claim 1, is reacted with a nitrating mixture, consisting of concentrated nitric acid or alkali metal nitrate and concentrated sulfuric acid, in the presence or absence of an organic solvent at from − 10 to + 15 °C.

9. A herbicide containing a diphenyl ether of the formula I as claimed in claim 1.

10. A herbicide containing inert additives and a diphenyl ether of the formula I as claimed in claim 1.

11. A process for combating the growth of unwanted plants, wherein the unwanted plants, of the area to be kept free of unwanted plant growth, are treated with a herbicidally effective amount of a diphenyl ether of the formula I as claimed in claim 1.

**Claims** (for the Contracting State/AT)

1. A herbicide containing inert additives and, as active ingredient, a diphenyl ether of the formula I

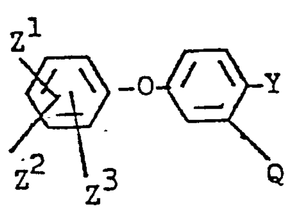

(I)

where

$Z^1$ is halogen, nitro, alkyl of 1 to 4 carbon atoms, or haloalkyl, alkoxy, haloalkoxy, alkylmercapto, haloalkylmercapto or haloalkylsulfonyl, where alkyl is in each case of 1 to 4 carbon atoms,

$Z^2$ and $Z^3$, independently of one another, are each hydrogen, halogen, nitro, alkyl of 1 to 4 carbon atoms, or haloalkyl, alkoxy, haloalkoxy, alkylmercapto, haloalkylmercapto or haloalkylsulfonyl, where alkyl is in each case of 1 to 4 carbon atoms,

Y is hydrogen or nitro, and

Q is —CO—NA—$OR^1$, where

A is hydrogen, alkyl of 1 to 4 carbon atoms, a metal ion or an unsubstituted or substituted ammonium ion, and

$R^1$ is carboxyalkyl or alkoxycarbonylalkyl of up to 10 carbon atoms.

2. A herbicide containing inert additives and, as active ingredient, a diphenyl ether of the formula I as claimed in claim 1, where

$Z^1$, $Z^2$ and $Z^3$ in the 2-, 4- and 6-, or 3-, 4- and 6-, or 3-, 4- and 5-positions on the phenyl ring, independently of one another, are halogen, or haloalkyl or haloalkylmercapto, each of 1 to 4 carbon atoms, and $Z^2$ and $Z^3$ are also hydrogen,

Y is hydrogen or nitro, and

Q is —CO—NA—OR$^1$, where

A is hydrogen or alkyl of 1 to 4 carbon atoms, and

$R^1$ is carboxyalkyl or alkoxycarbonylalkyl of up to 6 carbon atoms.

3. A herbicide containing inert additives and, as active ingredient, a diphenyl ether of the formula I as claimed in claim 1, where

$Z^1$, $Z^2$ and $Z^3$ in the 2-, 4- and 6-, or 3-, 4- and 5-positions, independently of one another, are halogen or haloalkyl of 1 to 4 carbon atoms, and $Z^2$ and $Z^3$ are also hydrogen,

Y is hydrogen or nitro, and

Q is —CO—NA—OR$^1$, where

A is hydrogen, and

$R^1$ is alkoxycarbonylalkyl of up to 6 carbon atoms.

4. A herbicide containing inert additives and, as active ingredient, 3-(2'-chloro-4'-trifluoromethyl-phenoxy)-6-nitro-benz-hydroxamic acid-(α-methoxycarbonyl)-ethylether.

5. A herbicide containing inert additives and, as active ingredient, 3-(2'-chloro-4'-trifluoromethyl-phenoxy)-benz-hydroxamic acid-(α-methoxycarbonyl)-methylether.

6. A herbicide containing inert additives and, as active ingredient, 3-(2'-Chloro-4'-trifluoromethyl-phenoxy)-benz-hydroxamic acid-(α-methoxycarbonyl)-ethylether.

7. A herbicide containing inert additives and, as active ingredient, 3-(2'-chloro-4'-trifluoromethyl-phenoxy)-6-nitro-benz-hydroxamic acid-(α-methoxycarbonyl)-methylether.

8. A process for the manufacture of a diphenyl ether of the formula I as claimed in claim 1, wherein

a) an acid chloride of the formula II

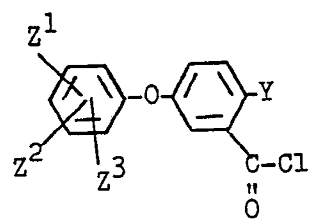

(II)

where $Z^1$, $Z^2$, $Z^3$ and Y have the meanings given in claim 1, is reacted with an O-substituted hydroxylamine of the formula III

$$H_2N—O—R^1 \quad (III)$$

where $R^1$ has the meanings given in claim 1, in an inert organic solvent, in the presence or absence of an acid acceptor, and at from − 10 to + 120 °C, or

b) a hydroxamic acid of the formula IV

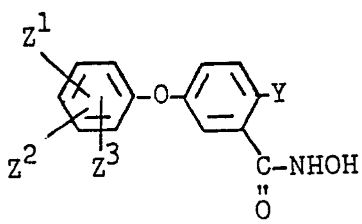

(IV)

where $Z^1$, $Z^2$, $Z^3$ and Y have the meanings given in claim 1, is reacted with a halogen compound of the formula V

$$Hal—R^1 \quad (V)$$

where $R^1$ has the meanings given in claim 1 and Hal is halogen, in an inert organic solvent, in the presence of an acid acceptor, and at from 0 to 150 °C, or

c) a hydroxamic acid of the formula VI

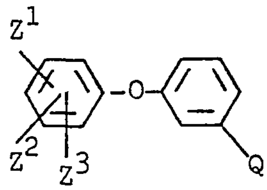

(VI)

where $Z^1$, $Z^2$ and $Z^3$ have the meanings given in claim 1, and Q is —CO—NA—OR[1], where A is hydrogen and R[1] has the meanings given in claim 1, is reacted with a nitrating mixture, consisting of concentrated nitric acid of alkali metal nitrate and concentrated sulfuric acid, in the presence or absence of an organic solvent at from − 10 to + 15 °C.

9. A process for combating the growth of unwanted plants, wherein the unwanted plants, or the area to be kept free of unwanted plant growth, are treated with a herbicidally effective amount of a diphenyl ether of the formula I as claimed in claim 1.

**Revendications** (pour les Etats contractants : BE, CH, DE, FR, GB, IT, LI, LU, NL, SE)

1. Diphényléther de formule I

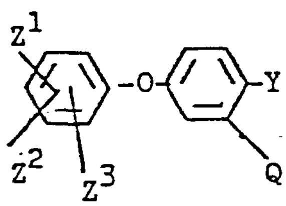

(I)

dans laquelle

$Z^1$ représente halogène, nitro, alkyle à 1 à 4 atomes de carbone, halogénoalkyle, alcoxy, halogénoalcoxy, alkylmercapto, halogénomercapto ou halogénoalkylsulfonyle ayant chacun 1 à 4 atomes dans le groupe alkyle,

$Z^2$ et $Z^3$ représentent, indépendamment l'un de l'autre, hydrogène, nitro, alkyle à 1 à 4 atomes de carbone, halogénoalkyle, alcoxy, halogénoalcoxy, alkylmercapto, halogénomercapto ou halogénoalkylsulfonyle ayant chacun 1 à 4 atomes de carbone dans le groupe alkyle,

Y représente hydrogène ou nitro et

Q, le reste —CO—NA—OR[1]

A représentant hydrogène, alkyle à 1 à 4 atomes de carbone, un ion métal ou un ion ammonium éventuellement substitué, et

R[1] représente carboxyalkyle ou alcoxycarbonylalkyle ayant jusqu'à 10 atomes de carbone.

2. Diphényléther de formule I selon la revendication 1, caractérisé par le fait que

$Z^1$, $Z^2$ et $Z^3$ représentent, indépendamment l'un de l'autre, halogène, halogénoalkyle ou halogénoalkylmercapto ayant chacun 1 à 4 atomes de carbone, en position 2,4,6-, 3,4,6- ou 3,4,5- sur le phényle, et $Z^2$ et $Z^3$ représentent en outre hydrogène

Y représente hydrogène ou nitro et

Q le reste —CO—NA—OR[1]

A représentant hydrogène ou alkyle à 1 à 4 atomes de carbone, et

R[1] représente carboxyalkyle ou alcoxycarbonylalkyle ayant jusqu'à 6 atomes de carbone.

3. Diphényléther de formule I selon la revendication 1, caractérisé par le fait que

$Z^1$, $Z^2$ et $Z^3$ représentent, indépendamment l'un de l'autre, halogène ou halogénoalkyle ayant chacun 1 à 4 atomes de carbone, en position 2,4,6- ou 3,4,5- et $Z^2$ et $Z^3$ représentent en outre hydrogène,

Y représente hydrogène ou nitro et

Q le reste —CO—NA—OR[1]

A représentant hydrogène et

R[1] représente alcoxycarbonylalkyle ayant jusqu'à 6 atomes de carbone.

4. 3-(2'-chloro-4'-trifluorométhylphénoxy)-6-nitro-benzhydroxamate de (α-méthoxycarbonyl)-éthyle.

5. 3-(2'-chloro-4'-trifluorométhylphénoxy)-benzhydroxamate de (α-méthoxycarbonyl)-méthyle.

6. 3-(2'-chloro-4'-trifluorométhylphénoxy)-benzhydroxamate de (α-méthoxycarbonyl)-éthyle.

7. 3-(2'-chloro-4'-trifluorométhylphénoxy)-6-nitro-benzhydroxamate de (α-méthoxycarbonyl)-méthyle.

8. Procédé de préparation de diphényléther de formule I selon la revendication 1, caractérisé par le fait qu'on fait réagir

a) un chlorure d'acide de formule II

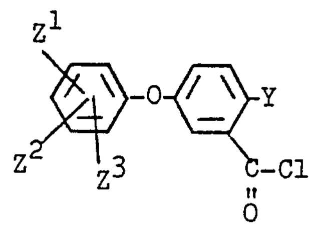

(II)

dans laquelle $Z^1$, $Z^2$, $Z^3$ et Y ont les significations données dans la revendication 1, avec une hydroxylamine substituée sur O, de formule III

$$H_2NOR^1 \quad (III)$$

dans laquelle $R^1$ a la signification donnée dans la revendication 1, éventuellement en présence d'un accepteur d'acide et d'un solvant inerte, à une température de − 10 à + 120 °C, ou

b) l'acide hydroxamique de formule IV

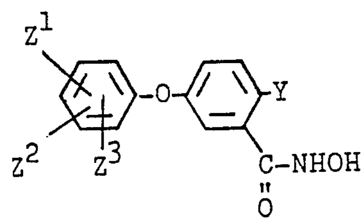

(IV)

dans laquelle $Z^1$, $Z^2$, $Z^3$ et Y ont les significations données dans la revendication 1, avec un composé halogéné de formule V

$$Hal—R^1 \quad (V)$$

dans laquelle $R^1$ a la signification donnée dans la revendication 1, et Hal représente halogène, en présence d'un accepteur d'acide et d'un solvant inerte, à une température de 0 à 150 °C, ou

c) l'acide hydroxamique de formule VI

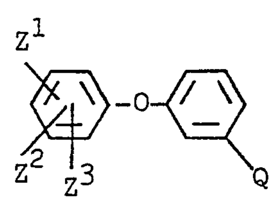

(VI)

dans laquelle $Z^1$, $Z^2$, et $Z^3$ ont les significations données dans la revendication 1 et Q représente le reste —CO—NA—$OR^1$, A représentant hydrogène et $R^1$ a la signification donnée dans la revendication 1, avec un mélange nitrant, constitué d'acide nitrique concentré ou de nitrate alcalin et d'acide sulfurique concentré, éventuellement en présence d'un solvant organique, à une température de − 10 à + 15 °C.

9. Herbicide contenant un diphényléther de formule I selon la revendication 1.

10. Herbicide contenant des additifs inertes et un diphényléther de formule I selon la revendication 1.

11. Procédé de lutte contre une croissance de plantes indésirables, caractérisé par le fait que l'on traite les plantes indésirables ou les surfaces à protéger d'une croissance indésirable des plantes, avec une quantité efficace au point de vue herbicide d'un diphényléther de formule I selon la revendication 1.

**Revendications** (pour l'Etat contractant/AT)

1. Herbicide contenant des additifs inertes et un diphényléther de formule I

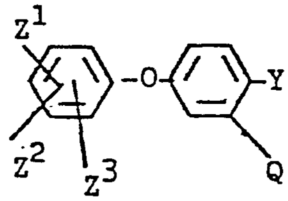

(I)

dans laquelle

$Z^1$ représente halogène, nitro, alkyle à 1 à 4 atomes de carbone, halogénoalkyle, alcoxy, halogénoalcoxy, alkylmercapto, halogénomercapto ou halogénoalkylsulfonyle ayant chacun 1 à 4 atomes dans le groupe alkyle,

$Z^2$ et $Z^3$ représentent, indépendamment l'un de l'autre, hydrogène, nitro, alkyle à 1 à 4 atomes de carbone, halogénoalkyle, alcoxy, halogénoalcoxy, alkylmercapto, halogénomercapto ou halogénoalkylsulfonyle ayant chacun 1 à 4 atomes de carbone dans le groupe alkyle,

Y représente hydrogène ou nitro et

Q, le reste —CO—NA—$OR^1$

A représentant hydrogène, alkyle à 1 à 4 atomes de carbone, un ion métal ou un ion ammonium éventuellement substitué, et

$R^1$ représente carboxyalkyle ou alcoxycarbonylalkyle ayant jusqu'à 10 atomes de carbone.

2. Herbicide contenant des additifs inertes et, comme principe actif, un diphényléther de formule I selon la revendication 1, dans lequel

$Z^1$, $Z^2$ et $Z^3$ représentent, indépendamment l'un de l'autre, halogène, halogénoalkyle ou halogénoalkylmercapto ayant chacun 1 à 4 atomes de carbone, en position 2,4,6-, 3,4,6- ou 3,4,5- sur le phényle, et $Z^2$ et $Z^3$ représentent en outre hydrogène

Y représente hydrogène ou nitro et

Q le reste —CO—NA—$OR^1$

A représentant hydrogène ou alkyle à 1 à 4 atomes de carbone, et

$R^1$ représente carboxylakyle ou alcoxycarbonylalkyle ayant jusqu'à 6 atomes de carbone.

3. Herbicide contenant des additifs inertes et comme principe actif, un diphényléther de formule I selon la revendication 1, dans lequel

$Z^1$, $Z^2$ et $Z^3$ représentent, indépendamment l'un de l'autre, halogène ou halogénoalkyle ayant chacun 1 à 4 atomes de carbone, en position 2,4,6- ou 3,4,5- et $Z^2$ et $Z^3$ représentent en outre hydrogène,

Y représente hydrogène ou nitro et

Q le reste —CO—NA—$OR^1$

A représentant hydrogène et

$R^1$ représente alcoxycarbonylalkyle ayant jusqu'à 6 atomes de carbone.

4. Herbicide contenant des additifs inertes et, comme principe actif, 3-(2'-chloro-4'-trifluorométhylphénoxy)-6-nitrobenzhydroxamate de (α-méthoxycarbonyl)-éthyle.

5. Herbicide contenant des additifs inertes et, comme principe actif, 3-(2'-chloro-4'-trifluorométhylphénoxy)-benzhydroxamate de (α-méthoxycarbonyl)-méthyle.

6. Herbicide contenant des additifs inertes et, comme principe actif, 3-(2'-chloro-4'-trifluorométhylphénoxy)-benzhydroxamate de (α-méthoxycarbonyl)-éthyle.

7. Herbicide contenant des additifs inertes et, comme principe actif, 3-(2'-chloro-4'-trifluorométhylphénoxy)-6-nitrobenzhydroxamate de (α-méthoxycarbonyl)-méthyle.

8. Procédé de préparation de diphényléther de formule I selon la revendication 1, dans lequel on fait réagir

a) un chlorure d'acide de formule II

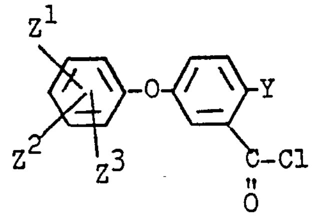

(II)

dans laquelle $Z^1$, $Z^2$, $Z^3$ et Y ont les significations données dans la revendication 1, avec une hydroxylamine substituée sur O, de formule III

$$H_2NOR^1 \qquad (III)$$

dans laquelle $R^1$ a la signification donnée dans la revendication 1, éventuellement en présence d'un accepteur d'acide et d'un solvant inerte, à une température de − 10 à + 120 °C, ou b) l'acide hydroxamique de formule IV

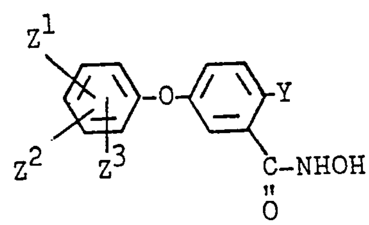

(IV)

dans laquelle $Z^1$, $Z^2$, $Z^3$ et Y ont les significations données dans la revendication 1, avec un composé halogéné de formule V

$$Hal—R^1 \qquad (V)$$

dans laquelle $R^1$ a la signification donnée dans la revendication 1, et Hal représente halogène, en présence d'un accepteur d'acide et d'un solvant inerte, à une température de 0 à 150 °C, ou

c) l'acide hydroxamique de formule VI

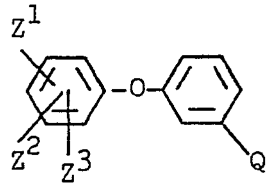

(VI)

dans laquelle $Z^1$, $Z^2$, et $Z^3$ ont les significations données dans la revendication 1 et Q représente le reste —CO—NA—OR$^1$, A représentant hydrogène et $R^1$ a la signification donnée dans la revendication 1, avec un mélange nitrant, constitué d'acide nitrique concentré ou de nitrate alcalin et d'acide sulfurique concentré, éventuellement en présence d'un solvant organique, à une température de − 10 à + 15 °C.

9. Procédé de lutte contre une croissance de plantes indésirables, caractérisé par le fait que l'on traite les plantes indésirables ou les surfaces à protéger d'une croissance indésirable des plantes, avec une quantité efficace au point de vue herbicide d'un diphényléther de formule I selon la revendication 1.